# EUROPÄISCHE PATENTSCHRIFT

(11) **EP 3 558 601 B1**
(45) Veröffentlichungstag und Bekanntmachung des Hinweises auf die Patenterteilung: **23.09.2020**
(21) Anmeldenummer: 17816609.6
(22) Anmeldetag: 05.12.2017
(51) Int. Cl.: B25J 13/02

(54) **ROBOTERSTEUERPULT**
ROBOT CONTROL CONSOLE
PUPITRE DE COMMANDE DE ROBOT

(30) Priorität: 20.12.2016 DE 102016225686
(43) Veröffentlichungstag der Anmeldung: 30.10.2019
(73) Patentinhaber: KUKA Deutschland GmbH, 86165 Augsburg (DE)
(72) Erfinder: RIEDEL, Martin, 86165 Augsburg (DE)
(74) Vertreter: Tillmann, Axel
(86) Internationale Anmeldenummer: PCT/EP2017/081469
(87) Internationale Veröffentlichungsnummer: WO 2018/114316

(56) Entgegenhaltungen:
- EP-A1- 2 397 280
- CN-U- 205 050 383
- DE-T5-112007 000 394
- JP-A- H11 122 723
- JP-A- 2006 321 014
- US-A1- 2015 227 134
- US-B1- 6 697 681

## Beschreibung

Die Erfindung betrifft ein Robotersteuerpult, aufweisend einen Halter, der zum formschlüssigen Aufnehmen eines aus dem Robotersteuerpult entnehmbaren, separat tragbaren Roboter-Bedienhandgeräts ausgebildet ist.

Die DE 10 2010 025 781 A1 beschreibt eine tragbare Sicherheitseingabeeinrichtung mit wenigstens einem Eingabemittel zum Eingeben eines Sicherheitssignals an eine Robotersteuerung, welche eine Schnittstelle aufweist zur Kommunikation mit einem mit der Sicherheitseingabeeinrichtung, insbesondere lösbar, verbundenen Handgerät zum Steuern eines Roboters mittels Kommunikation mit dieser Robotersteuerung.

Die WO 2013/029 658 A1 beschreibt einen Industrieroboter mit einer Robotersteuerung, an welche eine Zustimmeinrichtung über eine erste Signalleitung zur Signalübertragung angeschlossen ist. Ein von der Zustimmeinrichtung separat ausgebildetes Bedienhandgerät ist über eine zweite Signalleitung mit der Zustimmeinrichtung zur Signalübertragung verbunden. Die Zustimmeinrichtung kann dabei eine physikalische Anschlussstelle aufweisen, an die das Bedienhandgerät manuell lösbar mechanisch befestigt werden kann, so dass in einem Zusammengefügten Zustand die Zustimmeinrichtung mit dem Bedienhandgerät eine Baueinheit bildet.

Die EP 2 397 280 A1 beschreibt ein Schutzsystem- und ein Verfahren für einen Manipulator, wobei ein Pult vorgesehen ist, in welchem Handgeräte eingesteckt werden können. Die Handgeräte kommunizieren mit dem Pult über eine Anwesenheitserfassungseinrichtung.

Aufgabe der Erfindung ist es, die manuelle Steuerung und die Programmierung eines Roboters mittels eines Roboter-Bedienhandgeräts zu verbessern, insbesondere ergonomischer zu machen.

Die Aufgabe der Erfindung wird gelöst durch ein Robotersteuerpult, aufweisend:
- einen Halter, der zum formschlüssigen Aufnehmen eines aus dem Robotersteuerpult entnehmbaren, separat tragbaren Roboter-Bedienhandgeräts ausgebildet ist, wobei der Halter mehrere Rastmittel aufweist, die jeweils ausgebildet sind, mit jeweils einem von mehreren zum Rastmittel korrespondierenden Gegenrastmitteln des Roboter-Bedienhandgeräts in einem an dem Robotersteuerpult aufgenommenen Zustand des Roboter-Bedienhandgeräts zusammenzuwirken, derart, dass das Roboter-Bedienhandgerät in den an dem Robotersteuerpult aufgenommenen Zuständen wahlweise in einer von mehreren fest vorgegebenen, eindeutigen Orientierungen relativ zum Robotersteuerpult aufgenommen ist
- einen Sensor, der ausgebildet ist, ein individuelles in das Robotersteuerpult eingesetztes Roboter-Bedienhandgerät zu identifizieren, und
- eine Kommunikationsvorrichtung, die ausgebildet ist, eine Bedienhandgerätesteuerung des eingesetzten Roboter-Bedienhandgeräts in Abhängigkeit des vom Sensor identifizierten individuellen Roboter-Bedienhandgeräts mit einer dem individuellen Roboter-Bedienhandgerät zugeordneten Robotersteuerung steuerungstechnisch zu verbinden.

Ein formschlüssiges Aufnehmen kann insbesondere ein Einsetzen sein, bei dem das Roboter-Bedienhandgerät in eine Aufnahme, wie beispielsweise eine Tasche, eine Rinne, einen Schlitz oder eine Gabel eingesetzt wird, so dass der Halter das Roboter-Bedienhandgerät von außen, insbesondere an gegenüberliegenden Seiten des Roboter-Bedienhandgeräts umfängt. Ein formschlüssiges Aufnehmen kann jedoch ggf. auch schon durch ein bloßes Anhängen des Roboter-Bedienhandgeräts an den Halter erreicht werden, wie beispielsweise an Anhängen einer Lasche des Roboter-Bedienhandgeräts an einen Haken des Halters. Ein formschlüssiges Aufnehmen kann gegebenenfalls auch durch einen Magneten unterstützt werden, durch den das Roboter-Bedienhandgerät neben einer formschlüssigen Aufnahme zusätzlich mittels Magnetkraft gesichert ist.

Das Roboter-Bedienhandgerät kann in einer ersten Ausführungsform mittels einer elektrischen Leitung oder eines elektrischen Kabels mit einer Robotersteuerung verbunden sein. Über die elektrische Leitung bzw. die elektrische Kabel können Daten zwischen dem Roboter-Bedienhandgerät und der Robotersteuerung ausgetauscht werden. Darüber hinaus kann über die elektrische Leitung bzw. über das elektrische Kabel das Roboter-Bedienhandgerät mit elektrischer Energie versorgt werden.

Das Roboter-Bedienhandgerät kann in einer zweiten Ausführungsform einen wiederaufladbaren elektrischen Energiespeicher aufweisen. Aufgrund des wiederaufladbaren elektrischen Energiespeichers kann das Roboter-Bedienhandgerät mit elektrischer Energie versorgt werden, ohne eine elektrische Verbindungsleitung zu einer anderen Energiequelle, wie ein elektrisches Netz, aufweisen zu müssen, d.h. das Roboter-Bedienhandgerät kann drahtlos betrieben werden. Der wiederaufladbare elektrische Energiespeicher kann insbesondere ein Akku, eine Batterie oder ein Kondensator sein. Das Roboter-Bedienhandgerät weist eine Bedienhandgerätesteuerung auf. Der elektrische Energiespeicher dient unter Anderem dazu, die Bedienhandgerätesteuerung mit elektrischer Energie zu versorgen.

Das Roboter-Bedienhandgerät kann demgemäß eine elektrische Ladevorrichtung aufweisen, die ausgebildet ist zum Aufladen eines wiederaufladbaren elektrischen Energiespeichers des Roboter-Bedienhandgeräts in einem an dem Robotersteuerpult aufgenommenen Zustand des Roboter-Bedienhandgeräts. Die elektrische Ladevorrichtung kann elektrische Kontaktpaare umfassen, welche einerseits am Roboter-Bedienhandgerät und andererseits am Robotersteuerpult vorgesehen sein können, um elektrische Energie von dem Robotersteuerpult auf das Roboter-Bedienhandgerät übertragen zu können, um den elektrische Energiespeicher aufladen zu können. Die elektrische Energie kann mittels einer elektrischen Leitung oder eines elektrischen Kabels über ein Netz oder die Robotersteuerung an das Robotersteuerpult herangeführt sein. Statt elektrischen Kontaktpaaren kann die elektrische Ladevorrichtung zur Übertragung der elektrischen Energie von dem Robotersteuerpult auf das Roboter-Bedienhandgerät alternativ auch induktive Übertragungsbauelemente aufweisen, welche die elektrische Energie kontaktlos übertragen.

Die elektrische Ladevorrichtung kann demgemäß induktive Übertragungsbauelemente aufweisen, welche zur kontaktlosen Übertragung der elektrischen Energie von dem Robotersteuerpult auf das Roboter-Bedienhandgerät ausgebildet sind.

Die elektrische Ladevorrichtung kann eine mit einem elektrischen Netz, beispielsweise über eine Robotersteuerung, verbundene Energieleitung aufweisen, sowie mit dieser Energieleitung verbundene erste elektrische Kontakte aufweisen, die an dem Robotersteuerpult, insbesondere an dem Halter angeordnet sind. Über die ersten elektrischen Kontakte wird elektrische Energie an zweite elektrische Kontakte weitergeleitet, wenn das Roboter-Bedienhandgerät in dem Robotersteuerpult aufgenommen ist. Die zweiten elektrischen Kontakte sind demgemäß an dem Roboter-Bedienhandgerät angeordnet und sind mit dem wiederaufladbare elektrische Energiespeicher des Roboter-Bedienhandgeräts verbunden, so dass elektrische Energie aus dem Netz, über die ersten elektrischen Kontakte und die zweiten elektrischen Kontakte hinweg, in den wiederaufladbaren elektrischen Energiespeicher des Roboter-Bedienhandgeräts eingespeichert werden kann.

Indem das Robotersteuerpult einen Sensor aufweist, der ausgebildet ist, ein individuelles in das Robotersteuerpult eingesetztes Roboter-Bedienhandgerät zu identifizieren, und die Kommunikationsvorrichtung ausgebildet ist, eine Bedienhandgerätesteuerung des eingesetzten Roboter-Bedienhandgeräts in Abhängigkeit des vom Sensor identifizierten individuellen Roboter-Bedienhandgeräts mit einer dem individuellen Roboter-Bedienhandgerät zugeordneten Robotersteuerung steuerungstechnisch zu verbinden, kann wahlweise, d.h. je nach Bedarf des jeweiligen Roboterbedieners, eine bestimmtes, d.h. individuelles Roboter-Bedienhandgerät von mehreren Roboter-Bedienhandgeräten in eindeutiger und/oder technisch sicherer Weise mit einer bestimmten, d.h. individuellen Robotersteuerung verbunden werden, d.h. zugeordnet werden, so dass auf eindeutige Weise sichergestellt ist, welches individuelle Roboter-Bedienhandgerät mit welchem individuellen Roboter bzw. dessen Robotersteuerung verbunden ist.

Dadurch kann insbesondere zu unterschiedlichen Zeiten wahlweise ein bestimmtes Roboter-Bedienhandgerät und danach ein anderes Roboter-Bedienhandgerät mit der Robotersteuerung desselben Roboters verbunden werden, ohne dass es zu Konflikten kommt. Eine Zuordnung eines bestimmten, individuellen Roboter-Bedienhandgeräts zu einer bestimmten, individuellen Robotersteuerung und damit zu dem Roboter kann automatisch durch das Einsetzen des Roboter-Bedienhandgeräts in das Robotersteuerpult erfolgen. Eine durch ein erstmaliges Einsetzen erfolgte Zuordnung von Roboter-Bedienhandgerät zu der Robotersteuerung kann in einer ersten Fallgestaltung auch dann aufrechterhalten bleiben, wenn das eingesetzte Roboter-Bedienhandgerät wieder aus dem Robotersteuerpult entnommen wird. In einer anderen Fallgestaltung kann die Zuordnung von Roboter-Bedienhandgerät zu der Robotersteuerung automatisch aufgehoben, d.h. beendet werden, sobald das Roboter-Bedienhandgerät wieder aus dem Robotersteuerpult entnommen wird. Wird ein anderes Roboter-Bedienhandgerät in den freien Platz des Robotersteuerpults eingesetzt, kann die dem Robotersteuerpult zugeordnete Robotersteuerung mit diesem neu in das Robotersteuerpult eingesetzte Roboter-Bedienhandgerät automatisch verbunden werden und die bisherige Zuordnung der Robotersteuerung zu dem vorherigen Roboter-Bedienhandgerät aufgehoben, d.h. getrennt werden.

Die Kommunikationsvorrichtung ist insbesondere dazu eingerichtet, diejenige Bedienhandgerätesteuerung eines Roboter-Bedienhandgeräts mit einer Robotersteuerung steuerungstechnisch zu verbinden, die Teil desjenigen Roboter-Bedienhandgeräts ist, welches in das Robotersteuerpult eingesetzt ist.

Die Kommunikationsvorrichtung kann jedoch generell dazu eingerichtet sein, die Zuordnung ein oder mehrerer Roboter-Bedienhandgeräte zu ein oder mehreren Robotersteuerungen zu koordinieren, insbesondere einzurichten, zu schaffen, zu beenden und/oder zu verhindern bzw. nicht zuzulassen. Dies kann insbesondere automatisch erfolgen, d.h. ohne eine manuelle Eingabe durch einen Roboterbediener zu benötigen. Alternativ kann die Kommunikationsvorrichtung eingerichtet sein, aufgrund einer manuellen Eingabe an einem Eingabemittel des Robotersteuerpults und/oder des Roboter-Bedienhandgeräts in Abhängigkeit der manuellen Eingabe die Zuordnung ein oder mehrerer Roboter-Bedienhandgeräte zu ein oder mehreren Robotersteuerungen zu koordinieren, insbesondere einzurichten, zu schaffen, zu beenden und/oder zu verhindern bzw. nicht zuzulassen.

Grundsätzlich können also sowohl das jeweilige Roboter-Bedienhandgerät, die jeweilige Robotersteuerung und das jeweilige Robotersteuerpult kabelgebunden/kontaktgebunden und/oder drahtlos/funkverbunden miteinander kommunizieren, d.h. Signale, Daten und/oder Informationen austauschen. Die Kommunikationsvorrichtung des Robotersteuerpult kann dabei als zentrale Koordinationsvorrichtung dienen. So kann beispielsweise das Robotersteuerpult ausgebildet sein bzw. die Kommunikationsvorrichtung eingerichtet sein, fest, d.h. eindeutig mit einer einzelnen Robotersteuerung verbunden zu sein und eine Kommunikationsverbindung zwischen dieser Robotersteuerung und einem bestimmten Roboter-Bedienhandgerät wird dann automatisch eingerichtet und/oder zugelassen, sobald dieses Roboter-Bedienhandgerät in den Halter des Robotersteuerpults eingesetzt wird.

Wird das mit der zugeordneten Robotersteuerung verbundene Roboter-Bedienhandgerät wieder aus dem Halter des Robotersteuerpults entfernt, so kann entweder vorgesehen sein, dass die eingerichtet und/oder zugelassen Kommunikationsverbindung getrennt wird, oder es kann vorgesehen sein, dass die eingerichtet und/oder zugelassen Kommunikationsverbindung weiter bestehen bleibt. Dann kann die zugeordneten Robotersteuerung weiterhin durch dasjenige Roboter-Bedienhandgerät in einem von einer Person handhabenden Zustand des Roboter-Bedienhandgeräts angesteuert werden, auch wenn das Roboter-Bedienhandgerät aus dem Robotersteuerpult entnommen ist.

Wird dann beispielsweise genau dieses Roboter-Bedienhandgerät durch die Person zu einem anderen Roboter, zu einer anderen Roboterzelle, d.h. zu einer anderen Robotersteuerung gebracht und soll dieser andere Roboter nun von genau diesem Roboter-Bedienhandgerät gesteuert werden, so kann vorgesehen sein, dass eine Kommunikationsvorrichtung eines (anderen) Robotersteuerpults eingerichtet ist, dieses Roboter-Bedienhandgerät bzw. dessen Bedienhandgerätesteuerung mit dem andere Roboter (der mit dem anderen Robotersteuerpult verbunden ist) steuerungstechnisch zu verbinden, sobald das Roboter-Bedienhandgerät in das andere Robotersteuerpult des anderen Roboters bzw. der anderen Roboterzelle eingesetzt wird. In diesem Fall wird die bisherige steuerungstechnische Zuordnung des Roboter-Bedienhandgeräts zu dem einen (bisherigen) Roboter bzw. zu der bisherigen Robotersteuerung aufgehoben.

Generell kann vorgesehen sein, dass ein Roboter-Bedienhandgerät jedenfalls dann mit einer zugeordneten Robotersteuerung alleine steuerungstechnisch verbunden ist, welche Robotersteuerung mit demjenigen Robotersteuerpult gekoppelt ist bzw. steuerungstechnisch verbunden ist, an welchem Robotersteuerpult das betreffende Roboter-Bedienhandgerät in dessen Halter eingesetzt ist. In einem solchen Zustand kann der zugeordnete Roboter, d.h. die zugeordnete Robotersteuerung durch das in dem Robotersteuerpult eingesetzte Roboter-Bedienhandgerät manuell gesteuert und/oder programmiert werden.

Gemäß der Erfindung weist der Halter mehrere Rastmittel auf, die jeweils ausgebildet sind, mit jeweils einem von mehreren zum Rastmittel korrespondierenden Gegenrastmitteln des Roboter-Bedienhandgeräts in einem an dem Robotersteuerpult aufgenommenen Zustand des Roboter-Bedienhandgeräts zusammenzuwirken, derart, dass das Roboter-Bedienhandgerät in den an dem Robotersteuerpult aufgenommenen Zuständen wahlweise in einer von mehreren fest vorgegebenen, eindeutigen Orientierungen relativ zum Robotersteuerpult aufgenommen ist.

So können beispielsweise zwei Rastmittel derart am Halter angeordnet sein, dass das Roboter-Bedienhandgerät in genau zwei sich um 180 Grad unterscheidenden Orientierungen in das Robotersteuerpult einsetzbar ist. Es können aber auch beispielsweise vier Rastmittel derart am Halter angeordnet sein, dass das Roboter-Bedienhandgerät in genau vier sich um 90 Grad unterscheidenden Orientierungen in das Robotersteuerpult einsetzbar ist. Entsprechend sind auch eine beliebige andere Anzahl von Rastorientierungen möglich. Die Rastorientierungen müssen dabei nicht stets in denselben Winkelabständen voneinander angeordnet sein. Vielmehr können die Winkelabstände je nach Anwendungsfall unterschiedlich sein.

Jedes Rastmittel kann beispielsweise ein Vorsprung an dem Halter oder ein Vorsprung an einem Gehäuse des Robotersteuerpults sein. Jedes Gegenrastmittel des Roboter-Bedienhandgeräts ist dann ein korrespondierenden, insbesondere formkongruenter Rücksprung an dem Roboter-Bedienhandgerät. Solche Rastmittel und Gegenrastmittel stellen sicher, dass das Roboter-Bedienhandgerät nur in bestimmten Orientierungen in den Halter des Robotersteuerpults eingesetzt werden kann. In allen anderen Ausrichtungen, Orientierungen und/oder Lagen ist ein funktionsfähiges Einsetzen des Roboter-Bedienhandgeräts in das Robotersteuerpult nicht möglich, d.h. verhindert. Um funktionsfähig eingesetzt zu sein, ist es dabei zumindest erforderlich, dass die elektrische Ladevorrichtung den wiederaufladbaren elektrischen Energiespeicher des Roboter-Bedienhandgeräts aufladen kann.

Indem nur in bestimmten Orientierungen das Roboter-Bedienhandgerät in den Halter des Robotersteuerpults eingesetzt werden kann, ist sichergestellt, dass das Roboter-Bedienhandgerät stets in einer von diesen vorgegebenen Orientierungen relativ zum Robotersteuerpult angeordnet ist, wenn es in das Robotersteuerpult eingesetzt ist. Das Roboter-Bedienhandgerät kann beispielsweise eine 3D/6D-Maus aufweisen. Mittels einer solchen 3D/6D-Maus kann ein Roboter beispielsweise dessen Werkzeugbezugspunkt durch Bewegen der 3D/6D-Maus beispielsweise nach links, nach rechts, nach oben, nach unten, nach vorne, nach hinten in Raumrichtungen gesteuert werden. Indem das Roboter-Bedienhandgerät nur in bestimmten Orientierungen in den Halter des Robotersteuerpults eingesetzt werden kann, sind somit eindeutige, verwechslungsfreie Zuordnungen der Bewegungen der 3D/6D-Maus zu den tatsächlichen Raumrichtungen des Roboters vorgegeben.

Der Halter kann eine Tasche aufweisen, deren Innenfläche eine zu einem Griffabschnitt des Roboter-Bedienhandgeräts korrespondierende Gestalt aufweist, derart, dass in einem an dem Robotersteuerpult aufgenommenen Zustand des Roboter-Bedienhandgeräts dessen Griffabschnitt formschlüssig in der Tasche des Robotersteuerpults aufgenommen ist.

Der Halter kann eine radial offene Ringaufnahme aufweisen, derart, dass die Ringaufnahme einen Gehäuseabschnitt des Roboter-Bedienhandgeräts in einem an dem Robotersteuerpult aufgenommenen Zustand des Roboter-Bedienhandgeräts formschlüssig umgreift, wobei die Ringaufnahme einen den Gehäuseabschnitt des Roboter-Bedienhandgeräts über einen Teilumfang umgreifenden ersten Schenkelabschnitt aufweist und einen dem ersten Schenkelabschnitt gegenüberliegenden zweiten Schenkelabschnitt aufweist, der den Gehäuseabschnitt des Roboter-Bedienhandgeräts über einen anderen Teilumfang umgreift, und ein erstes freies Ende des ersten Schenkelabschnitts beabstandet zu einem zweiten freien Ende des zweiten Schenkelabschnitts angeordnet ist, so dass zwischen den beiden freien Enden ein Durchgriffspalt gebildet wird, über den das Roboter-Bedienhandgerät trotz seines an dem Robotersteuerpult aufgenommenen Zustands hintergriffen werden kann, um eine Rückseite des Gehäuseabschnitt des Roboter-Bedienhandgeräts manuell erfassen zu können.

Das Roboter-Bedienhandgerät kann beispielsweise ein im wesentlichen kreiszylindrisches Hauptgehäuse aufweisen. An diesem kreiszylindrischen Hauptgehäuse kann sich an dessen Bodenseite ein Griffabschnitt vertikal nach unten erstrecken. An einer Oberseite des kreiszylindrischen Hauptgehäuses kann eine 3D/6D-Maus, ein Notaus-Taster und/oder ein Betriebsartenwahlschalter angeordnet sein. Die offene Ringaufnahme des Halters des Robotersteuerpults kann ausgebildet sein, das kreiszylindrische Hauptgehäuse des Roboter-Bedienhandgeräts zu umfassen, wenn das Roboter-Bedienhandgerät in das Robotersteuerpult eingesetzt ist. Der erste Schenkelabschnitt der Ringaufnahme kann das kreiszylindrische Hauptgehäuse des Roboter-Bedienhandgeräts rechtsseitig einfassen und der zweite Schenkelabschnitt der Ringaufnahme kann das kreiszylindrische Hauptgehäuse des Roboter-Bedienhandgeräts linksseitig einfassen, wobei das erste freie Ende des ersten Schenkelabschnitts in einem Abstand vom zweiten freien Ende des zweiten Schenkelabschnitts angeordnet ist. Zwischen dem ersten freien Ende des ersten Schenkelabschnitts und dem zweiten freien Ende des zweiten Schenkelabschnitts wird demgemäß eine radiale Öffnung der Ringaufnahme gebildet. Die radiale Öffnung der Ringaufnahme erlaubt es einem Benutzer mit seiner Hand das kreiszylindrische Hauptgehäuse des Roboter-Bedienhandgeräts bis zu einer Rückseite zu umfassen, ohne dass der Halter bzw. die Ringaufnahme ein Erfassen des Roboter-Bedienhandgeräts in diesem Bereich verhindern würde. Dadurch kann beispielsweise auf einen an der Rückseite des kreiszylindrischen Hauptgehäuses des Roboter-Bedienhandgeräts angeordneten Zustimmtaster manuell mit einer Hand zugegriffen werden, selbst wenn das Roboter-Bedienhandgerät in dem Robotersteuerpult eingesetzt ist. Unabhängig davon ist eine Entnahme des Roboter-Bedienhandgerät aus dem Robotersteuerpult mit der Hand dadurch generell erleichtert.

Die elektrische Ladevorrichtung kann eine erste elektrische Kontaktanordnung aufweisen, die in einem an dem Robotersteuerpult aufgenommenen Zustand des Roboter-Bedienhandgeräts an eine zweite elektrische Kontaktanordnung des Roboter-Bedienhandgeräts elektrisch kontaktiert ist, zum Aufladen des wiederaufladbaren elektrischen Energiespeichers des Roboter-Bedienhandgeräts in seinem an dem Robotersteuerpult aufgenommenen Zustand.

Das Robotersteuerpult kann wenigstens einen Sensor aufweisen, der ausgebildet ist, zur Erkennung, ob ein Roboter-Bedienhandgerät ordnungsgemäß in das Robotersteuerpult eingesetzt ist. Ein Roboter-Bedienhandgerät kann dabei als ordnungsgemäß in das Robotersteuerpult eingesetzt gelten, wenn die erste elektrische Kontaktanordnung an die zweite elektrische Kontaktanordnung kontaktiert ist und somit die elektrische Ladevorrichtung den wiederaufladbaren elektrischen Energiespeicher des Roboter-Bedienhandgeräts aufladen kann.

Das Robotersteuerpult kann wenigstens einen Sensor aufweisen, der ausgebildet ist, ein individuelles in das Robotersteuerpult eingesetztes Roboter-Bedienhandgerät zu identifizieren. Dabei kann jedes Roboter-Bedienhandgerät eine das konkrete Roboter-Bedienhandgerät individualisierende Kennzeichnung aufweisen. Eine Kennzeichnung kann beispielsweise eine optische Kennzeichnung, zum Beispiel mittels eines optischen Stichcodes oder eines QR-Codes sein. Alternativ oder ergänzend kann eine Kennzeichnung auch eine digital gespeicherte Information sein, die zum Beispiel mittels berührungsloser Sender-Empfänger-System, wie beispielsweise Nahfeldsensoren (NFC oder RFID-Transponder) oder leitungsgebunden über eine Datenverbindung von dem Roboter-Bedienhandgerät auf das Robotersteuerpult übertragen werden kann.

Die Kommunikationsvorrichtung kann mittels einer Kommunikationsverbindung mit einer Robotersteuerung steuerungstechnisch verbunden sein, und die Kommunikationsvorrichtung kann dabei wenigstens einen Sensor aufweisen, der ausgebildet ist, ein an dem Robotersteuerpult aufgenommenes Roboter-Bedienhandgerät zu identifizieren, und die Kommunikationsvorrichtung kann dabei des Weiteren ausgebildet sein, das durch den Sensor identifizierte Roboter-Bedienhandgerät bei der Robotersteuerung als ein Handsteuergerät zum Ansteuern eines von der Robotersteuerung gesteuerten Roboterarms anzumelden.

Wenn das Roboter-Bedienhandgerät bei der Robotersteuerung als ein Handsteuergerät zum Ansteuern eines von der Robotersteuerung gesteuerten Roboterarms angemeldet ist, dann ist eine Kommunikation der Bedienhandgerätesteuerung mit der Robotersteuerung möglich, insbesondere in sicherer Technik möglich. Es besteht dann eine eindeutige Verbindung des Roboter-Bedienhandgeräts mit dem zugeordneten Roboter.

Das Robotersteuerpult kann einen multifunktionalen Steckplatz aufweisen, der ausgebildet ist, wahlweise einen von wenigstens zwei alternativen Steckeinheiten aus der Gruppe der Steckeinheiten Tablet-Computerhalter, Zusatzeingabemittel, drahtloser Sender und/oder Empfänger, elektrische Anschlussbuchse und Blendenkappe, manuell lösbar aufzunehmen.

Das Robotersteuerpult kann somit neben dem Halter, an welchem das Roboter-Bedienhandgerät aufgenommen sein kann, den multifunktionalen Steckplatz aufweisen, der insoweit einen zweiten Halter für ergänzende Komponenten darstellt. Mittels des multifunktionalen Steckplatzes kann das Robotersteuerpult mit weiteren Funktionen ausgestattet werden.

Im Falle einer Steckeinheit eines Tablet-Computerhalters kann an dem Steckplatz des Robotersteuerpults eine verstellbare, insbesondere federvorgespannte Klemme gelagert sein, die ausgebildet ist, in einer gespannten Auszugsstellung einen mobilen Tablet-Computer kraft und/oder formschlüssig an dem Robotersteuerpult zu halten. Dazu kann die Klemme ausgebildet sein, zwei gegenüberliegende Randabschnitte des Tablet-Computers zu umgreifen.

Im Falle einer Steckeinheit eines Zusatzeingabemittels kann an dem Steckplatz des Robotersteuerpults ein oder mehrere Eingabemittel beispielsweise ein Notaus-Taster, ein Zustimmtaster, ein Starttaster, ein Betriebsarten-Wahlschalter und/oder eine 3D/6D-Maus angeordnet sein. Wird die Steckeinheit des Zusatzeingabemittels an den Steckplatz des Robotersteuerpults angesteckt, ist die Steckeinheit des Zusatzeingabemittels nicht nur mechanisch an dem Robotersteuerpult befestigt, sondern auch steuerungstechnisch, insbesondere elektrisch an das Robotersteuerpult, insbesondere über das Robotersteuerpult mit der Robotersteuerung und/oder dem Roboter-Bedienhandgerät verbunden, so dass über das angesteckte Eingabemittel, wie beispielsweise der Notaus-Taster, der Zustimmtaster, die Starttaste, der Betriebsarten-Wahlschalter und/oder die 3D/6D-Maus, der Roboter manuell gesteuert werden kann.

Im Falle einer Steckeinheit eines drahtlosen Senders und/oder Empfängers kann an dem Steckplatz des Robotersteuerpults ein drahtloser Sensor hinzugefügt werden, über den beispielsweise ein mechanisch angekoppelter Tablet-Computer und/oder das in das Robotersteuerpults eingesetzte Roboter-Bedienhandgerät drahtlos erkannt werden kann.

Im Falle einer Steckeinheit einer elektrischen Anschlussbuchse kann an dem Steckplatz des Robotersteuerpults eine zusätzliche Schnittstelle geschaffen werden, beispielsweise in Form einer USB-Anschlussbuchse, um standardisierte Geräte, insbesondere mobile Kommunikationsendgeräte, wie beispielsweise mobile Telefone oder Tablet-Computer steuerungstechnisch anschließen zu können. Die elektrischen Anschlussbuchse kann ggf. auch als ein drahtloser Internetzugriffspunkt (WLAN-Hotspot) ausgebildet sein.

Im einfachsten Falle ist die Steckeinheit eine bloße Blendenkappe, welche den multifunktionalen Steckplatz optisch verdeckt und insbesondere mit dem Gehäuse des Robotersteuerpults bündig abschließt. So kann die Blendenkappe auch einen Staubschutz bilden.

Das Robotersteuerpult kann einen Wandhalter aufweisen, der zur Befestigung des Robotersteuerpults an einer vertikalen Wand ausgebildet ist. Der Wandhalter kann dabei ausgebildet sein, das Robotersteuerpult mittels separater Befestigungsmittel, wie beispielsweise Schrauben, an einer vertikalen Wand befestigen zu können. Die Wand kann beispielsweise eine Gebäudewand sein, aber auch eine Seitenwand eines Steuerschranks, insbesondere der Robotersteuerung oder eine Begrenzungswand oder Schutzwand einer Roboterzelle.

Das Robotersteuerpult kann einen Standfuß aufweisen, der ausgebildet ist, zum Halten des Robotersteuerpults auf einer Standfläche und zum Sichern des Robotersteuerpults gegen Umkippen. Der Standfuß kann fest mit dem Gehäuse des Robotersteuerpults verbunden sein, insbesondere derart, dass der Halter des Robotersteuerpultes nach oben weist, so dass das Roboter-Bedienhandgerät von oben in den Halter eingesetzt werden kann, wenn das Robotersteuerpult mittels des Standfußes beispielsweise auf einer Tischplatte oder auf einer Deckenwand eines Steuerschranks, insbesondere der Robotersteuerung, abgestellt ist.

Das Robotersteuerpult kann einen Tragarm aufweisen, der wenigstens ein erstes Glied aufweist, das eine Befestigungsvorrichtung zum ortsfesten installieren des Tragarms aufweist, und ein zweites Glied aufweist, an dem das Robotersteuerpult befestigt ist, wobei das erste Glied mit dem zweiten Glied über wenigstens ein Gelenk gegeneinander verstellbar verbunden sind, derart, dass durch Verstellen des wenigstens einen Gelenks das Robotersteuerpult in seiner räumlichen Position und/oder Lage bezüglich der ortsfesten Befestigungsvorrichtung verstellt werden kann. Der Tragarm kann demgemäß in Art eines Teleskoparmes, eines Gelenkarmes oder eines Scherenarmes ausgebildet sein.

Das Robotersteuerpult kann ein Fahrstativ aufweisen, das ein Fahrwerk mit wenigstens drei Rädern und eine am Fahrwerk gelagerte Tragsäule umfasst, an der das Robotersteuerpult befestigt ist. Mittels des Fahrstativs kann das Roboter-Bedienhandgerät auf einer festen Höhe gelagert werden, ohne dass ein Benutzer das Roboter-Bedienhandgerät in seinen Händen halten muss, wobei es weiterhin möglich ist, das Roboter-Bedienhandgerät in einer horizontalen Ebene zu verfahren, um das Roboter-Bedienhandgerät beispielsweise innerhalb einer Roboterzelle, in der ein Benutzer einen Roboter programmieren will, umpositionieren zu können.

Das Robotersteuerpult kann in erster Linie eine definierte Ablage für das Roboter-Bedienhandgerät bieten, bei gleichzeitiger Lademöglichkeit der Akkus des Roboter-Bedienhandgeräts. Dabei erfolgt eine steuerungstechnische Detektion bzw. Zuordnung des Bedienhandgeräts zur Robotersteuerung, insbesondere in sicherer Technik. Das Anbringen des Roboter-Bedienhandgeräts an das Robotersteuerpult geschieht vorzugsweise durch einfaches Einlegen des Roboter-Bedienhandgerät in eine am Robotersteuerpult dafür vorgesehene Vertiefung. Durch das Eigengewicht des Roboter-Bedienhandgeräts und die Rastmittel wird das Roboter-Bedienhandgerät im Robotersteuerpult festgehalten. Dabei kann der Akku des Roboter-Bedienhandgeräts berührend über elektrische Ladekontakte oder berührungslos mittels Induktion vom Robotersteuerpult ausgehend aufgeladen werden. Beispielsweise mittels kabellosen Koppelungsverfahren, wie der Nahfeldkommunikationstechnologie (NFC) oder mittels Sender-Empfänger-Systemtechnologien zum automatischen und berührungslosen Identifizieren und Lokalisieren von Objekten (RFID) kann nicht nur dem Robotersteuerpult die Tatsache mitgeteilt werden, dass ein bestimmtes Roboter-Bedienhandgerät an das Robotersteuerpult gekoppelt ist, sondern es kann auch dem Roboter-Bedienhandgerät mitgeteilt werden, mit welchem individuellen Robotersteuerpult das individuelle Roboter-Bedienhandgerät verbunden ist. So kann es nämlich vorgesehen sein, dass ein bestimmtes Roboter-Bedienhandgerät prinzipiell zum Steuern mehrerer verschiedener Roboter verwendet werden kann, wobei in jedem Moment der Verwendung das Roboter-Bedienhandgerät stets nur einem einzigen, bestimmten Roboter steuerungstechnisch zugeordnet sein darf. Beispielsweise kann jeder einzelne Roboter ein eigenes Robotersteuerpult aufweisen. Demgemäß können bei mehreren Robotern somit auch mehrere Robotersteuerpulte vorhanden sein. Mit einem Einlegen des Roboter-Bedienhandgeräts in den Halter oder die Aufnahme des Robotersteuerpultes wird dann beispielsweise mittels einer der genannten kabellosen Koppelungsverfahren die eindeutige steuerungstechnische Zuordnung von Roboter-Bedienhandgerät zu Roboter hergestellt.

Statt kabelloser Koppelungsverfahren können auch mechanische und/oder elektrische Kontakte zur Signalübertragung und Kommunikation von Roboter-Bedienhandgerät und Robotersteuerpult verwendet werden. Es kann außerdem des weiteren eine Sensorik vorhanden sein, die zur Erfassung darüber dient, welches bestimmte Roboter-Bedienhandgerät momentan an das Robotersteuerpult gekoppelt ist. Eine Auswertung und/oder Verifizierung der Zuordnung von Roboter-Bedienhandgerät und Robotersteuerpult kann beispielsweise durch Beschleunigungssensoren in beiden Koppelpartnern (Roboter-Bedienhandgerät und Robotersteuerpult) erfolgen, die aufgrund synchroner Sensorwerte auf eine mechanische Kopplung von Roboter-Bedienhandgerät und Robotersteuerpult schließen lassen. Das mindestens eine Robotersteuerpult ist in seinem Betriebszustand stets fest einer bestimmten individuellen Robotersteuerung zugeordnet. Das Robotersteuerpult und die zugeordnete Robotersteuerung können bei Installation des Roboters bzw. einer Roboterzelle mittels Energie- und/oder Datenkabel verbunden sein und können in einer besonderen Ausführungsform auch insbesondere in sicherer Technik ausgeführt sei und mit der Robotersteuerung kommunizieren. Durch ein Aufsetzen, Einstellen oder Einlegen des Roboter-Bedienhandgeräts in das und Robotersteuerpult werden das Roboter-Bedienhandgerät und die dazugehörige Robotersteuerung immer automatisch aufeinander zugeordnet. Damit ist stets gewährleistet, dass die Zuordnung des Roboter-Bedienhandgeräts zu einem bestimmten Roboter eindeutig ist, wenn sich das Roboter-Bedienhandgerät in der Halterung des Robotersteuerpults befindet oder zuletzt/soeben aus dem Robotersteuerpult entnommen wurde.

Das Robotersteuerpult kann so ausgebildet sein, dass es einerseits eine Reihe von Funktionen zur Ansteuerung und/oder Überwachung des zugeordneten Roboters selber bereitstellt. Anderseits kann das Robotersteuerpult auch so ausgebildet sein, dass die Nutzung des Roboter-Bedienhandgeräts auch im angedockten Zustand an das Robotersteuerpult weiterhin möglicht ist. So kann das Robotersteuerpult bei eingelegtem Roboter-Bedienhandgerät durch Betätigungs- und/oder Anzeigeelemente zu einer kleinen stationären Steuertafel oder Bedienterminal ergänzt werden. Ein solches zu einer stationären Steuertafel oder Bedienterminal erweiterte Robotersteuerpult kann beispielsweise auch ein insbesondere kleines Display aufweisen, ein Statusanzeigemittel, ein Eingabemittel und/oder einen Starttaster, sowie insbesondere über sichere Zustimmtaster und Nothalt-Taster, die im mechanisch angekoppelten Zustand des Roboter-Bedienhandgeräts an das Robotersteuerpult funktionsfähig und steuerbar bzw. bedienbar sind.

Nach der Erfindung umfasst das Robotersteuerpult folgende Komponenten und/oder Funktionen:
- Eine mechanische Aufnahme mittels Rastmitteln, d.h. Halterung des Roboter-Bedienhandgeräts an dem Robotersteuerpult, derart, dass durch ein solches mechanische Koppeln eindeutige relative Orientierungen des Roboter-Bedienhandgeräts bezüglich des Robotersteuerpults vorgegeben sind.
- Eine steuerungstechnische Detektion des Roboter-Bedienhandgeräts mittels einer Sensorik, insbesondere in sicherer Technik, um das individuell angekoppelte Roboter-Bedienhandgerät identifizieren und die Zuordnung zur Robotersteuerung feststellen zu können.
- Eine Kommunikationsvorrichtung, die ausgebildet ist, eine Bedienhandgerätesteuerung mit der Robotersteuerung steuerungstechnisch zu verbinden, insbesondere um das Roboter-Bedienhandgerät und/oder Robotersteuerung bzw. des Roboter identifizierende Informationen zwischen dem Roboter-Bedienhandgerät und der Robotersteuerung über das Robotersteuerpult auszutauschen.

Zusätzlich kann das Robotersteuerpult auch folgende Komponenten und/oder Funktionen umfassen:
- Eine elektrische Ladevorrichtung, die ausgebildet ist, zum Aufladen eines wiederaufladbaren elektrischen Energiespeichers des Roboter-Bedienhandgeräts.
- Wenigstens ein Eingabemittel, wie beispielsweise zusätzliche, alternative oder redundant vorhandene Hardwaretasten zu denjenigen des Roboter-Bedienhandgeräts. Das wenigstens eine Eingabemittel kann beispielsweise ein Nothalt-Taster, ein Betriebsarten-Wahlschalter und/oder ein Joystick, wie insbesondere eine 3D/6D-Maus sein.

- Eine ergänzende Zweithalterung, insbesondere für ein mobiles Kommunikations-Endgerät, wie beispielsweise ein Tablet-Computer.
- Eine ergänzende elektrische Zweitladevorrichtung, die ausgebildet ist, zum Aufladen eines wiederaufladbaren elektrischen Energiespeichers des Kommunikations-Endgeräts, insbesondere des Tablet-Computers. Die ergänzende Zweitladevorrichtung kann dazu beispielsweise eine elektrische Standardbuchse, wie insbesondere eine USB-Buchse aufweisen. Alternativ oder ergänzend zu einer kabelgebundenen Lösung kann ein Aufladen mit elektrischer Energie auch induktiv erfolgen.
- Eine steuerungstechnische Detektion des Kommunikations-Endgeräts, insbesondere des Tablet-Computers mittels einer Zweitsensorik, insbesondere in sicherer Technik, um das individuell angekoppelte Kommunikations-Endgerät, insbesondere den Tablet-Computer identifizieren und die Zuordnung zur Robotersteuerung und/oder zum Roboter-Bedienhandgerät feststellen zu können.
- Eine Datenschnittstelle, die insbesondere dazu eingerichtet ist, Daten und/oder Informationen von dem Roboter-Bedienhandgerät auf die Robotersteuerung zu übertragen, Daten und/oder Informationen von der Robotersteuerung auf das Roboter-Bedienhandgerät zu übertragen, und/oder im Robotersteuerpult zwischenzuspeichern.
- Eine Komponente zum Betreiben eines drahtlosen lokalen Netzwerkes (WLAN), insbesondere in der Bauart einer Basisstation (Access Point) oder eines Funkadapters. Die Komponente kann auch ein sonstiges elektronisches Gerät sein, das beispielsweise als Schnittstelle für kabellose Kommunikationsgeräte fungiert, wie beispielsweise ein Signalverstärker oder Signalaufbereiter (Repeater) zur Vergrößerung der Reichweite eines Signals. Dieses Gerät befindet sich dann in dem Robotersteuerpult und ist dabei in einiger Entfernung zum Sender, empfängt dessen Signale und sendet sie in aufbereiteter Form weiter, wodurch eine größere Distanz überbrückt werden kann. Der Sender kann in einem solchen Falle dann in der Robotersteuerung oder in dem Roboter-Bedienhandgerät angeordnet sein.
- Eine Kabeleinzugstrommel und/oder eine Kabelhalterung, insbesondere in den Ausführungsformen, in denen das Robotersteuerpult über eine elektrische Leitung oder Kabel mit der Robotersteuerung drahtgebunden steuerungstechnisch verbunden ist.

Wie beschrieben kann das Robotersteuerpult auch einen zusätzlichen Halter aufweisen, um auch einen Tablet-Computer ankoppeln, detektieren und laden zu können. Ein beispielsweise optionaler USB-Anschluss am Robotersteuerpult kann eine einfache und praktische Übertragung von Daten an die Robotersteuerung ermöglichen. Dies kann insbesondere dann zweckmäßig sein, wenn die Robotersteuerung unzugänglich oder weit entfernt vom Robotersteuerpult und/oder Roboter-Bedienhandgerät aufgestellt ist. Die optionale Komponente zum Betreiben eines drahtlosen lokalen Netzwerkes kann die Funkqualität und damit die Kommunikation des Roboter-Bedienhandgerät und des Tablet-Computers mit der Robotersteuerung verbessern, wenn das Roboter-Bedienhandgerät und/oder der Tablet-Computer sich in der Nähe des Robotersteuerpultes befindet, also jeweils nicht mechanisch an dem Robotersteuerpult angekoppelt sind.

Zur idealen Aufstellung und Anpassung des Robotersteuerpultes kann ein Baukastensystem verwendet werden, welches gezielt eine freie Konfiguration gemäß der späteren gewünschten Verwendung ermöglicht. Dazu kann das Robotersteuerpult einen Basiskörper aufweisen, welcher zumindest die Grundfunktionen des mechanischen Haltens, des Akkuladens und des steuerungstechnischen Erkennens des momentan eingesetzten Roboter-Bedienhandgeräts aufweist. Diese Grundfunktionen können optional durch den genannten Tablet-Computer ergänzt sein. Die Grundfunktionen können durch beliebige weitere optionale Funktionen ergänzt werden, so beispielsweise durch zusätzliche Energie- und Datenschnittstellen und/oder Eingabemittel, wie beispielsweise zusätzliche, alternative oder redundant vorhandene Hardwaretasten zu denjenigen des Roboter-Bedienhandgeräts. Das wenigstens eine Eingabemittel kann dabei beispielsweise ein Nothalt-Taster, ein Betriebsarten-Wahlschalter und/oder ein Joystick, wie insbesondere eine 3D/6D-Maus sein.

Die optionalen bzw. ergänzenden Funktionen können einzeln oder kombiniert in elektrischen Anschlussgeräten ausgebildet sein, die an das Robotersteuerpult steuerungstechnisch angekoppelt und insbesondere auch mechanisch verbunden sein können. Die Anschlussgeräten können lösbar und/oder ansteckbar mit dem Basiskörper des Robotersteuerpults verbindbar sein. Die Anschlussgeräte bilden insoweit ansteckbare Module, die beliebig an das Robotersteuerpult angesteckt und wieder abgenommen werden können. Je nach Montageort bzw. Aufstellort

kann das Robotersteuerpult auch durch ein zugehöriges mechanisches Anbindungsmodul, wie einen Standfuß, einen Tragarm, eine Rollbasis und/oder einen ortsfesten Direktanschluss erweitert sein.

Das Robotersteuerpult kann vorzugsweise geometrisch so ausgebildet sein, dass ein mechanischer Koppelzustand nur in fest vorgegebenen gegenseitigen Orientierungen von Roboter-Bedienhandgerät und Robotersteuerpult möglich ist. In jeder gegenseitigen räumlichen Lage können beispielsweise aufgrund von Aussparungen am Robotersteuerpult alle wesentlichen Tasten und/oder Tastenkombinationen, wie beispielsweise Zustimmtaster, Starttaster, Notaus-Taster und/oder 3D/6D Mauseingabe, ergonomisch günstig vom Benutzer erreicht und betätigt werden. Ebenso kann aufgrund von Aussparungen am Robotersteuerpult eine manuelle Entnahme des Roboter-Bedienhandgeräts durch einfaches Anheben und/oder Herausziehen möglich sein.

Durch eine insbesondere in sicherer Technik ausgeführte Detektion von Einsetz-Vorgängen und Entnahme-Vorgängen des Roboter-Bedienhandgeräts, kann das Robotersteuerpult situationsabhängig automatisch Befehle, Daten und/oder Informationen an die Robotersteuerung übertragen, um Arbeitsvorgänge des Roboters noch intuitiver und effizienter zu gestalten. Diese Befehle können einerseits automatisch eine Funktion beim Roboter auslösen und/oder andererseits Funktionen vorwählen, vorschlagen bzw. bereitstellen, die vom Nutzer bewusst und manuell ausgewählt, insbesondere bestätigt werden können.

So können beispielsweise folgende automatische Funktionsvorwahlszenarien beim Ablegen, d.h. Einsetzen des Roboter-Bedienhandgeräts in das Robotersteuerpult vorgesehen sein:
- Wenn das Roboter-Bedienhandgerät sich außerhalb des Robotersteuerpults befindet und/oder sich in einer Hand eines Benutzers befindet, kann ein Roboterprogrammablauf mittels des Roboter-Bedienhandgeräts in einem Testmodus getestet werden. Wird anschließend das Roboter-Bedienhandgerät in das Robotersteuerpult eingesetzt, dann kann eine Abfrageinformation, vorzugsweise am Roboter-Bedienhandgerät oder am Robotersteuerpult ausgeben werden, mit der angefragt wird, ob die Robotersteuerung auf einen Automatik-Modus umgeschaltet werden soll, was dann vorzugsweise noch durch eine Quittierungseingabe manuell zu bestätigen wäre.
- Wenn das Roboter-Bedienhandgerät sich außerhalb des Robotersteuerpults befindet und/oder sich in einer Hand eines Benutzers befindet, kann eine Unterbrechen eines Roboterprogramms und ein Anfahren einer vorgegebenen Pose eines Roboterarms erfolgen. Wird anschließend das Roboter-Bedienhandgerät wieder in das Robotersteuerpult eingesetzt, dann kann eine Wiederaufnahme des Roboterprogrammablaufs erfolgen, was dann vorzugsweise noch durch eine Quittierungseingabe manuell zu bestätigen wäre.
- Wenn das Roboter-Bedienhandgerät sich außerhalb des Robotersteuerpults befindet und/oder sich in einer Hand eines Benutzers befindet, kann die Robotersteuerung den Roboterarm in einem sicheren Modus und/oder in einem langsamen Mensch-Maschine-Kollaborations(MRK)-Modus befinden. Wird anschließend das Roboter-Bedienhandgerät wieder in das Robotersteuerpult eingesetzt, dann kann der Automatikmodus mit hoher Geschwindigkeit eingestellt werden, was dann vorzugsweise noch durch eine Quittierungseingabe manuell zu bestätigen wäre.
- Wenn das Roboter-Bedienhandgerät sich außerhalb des Robotersteuerpults befindet und/oder sich in einer Hand eines Benutzers befindet, kann eine räumliche Zuordnung der Freiheitsgrade einer 3D/6D-Maus oder eines Joysticks, insbesondere gemäß einer Benutzervorgabe, erfolgen. Wird anschließend das Roboter-Bedienhandgerät wieder in das Robotersteuerpult eingesetzt, dann kann eine geänderte räumliche Zuordnung der Freiheitsgrade der 3D/6D-Maus oder des Joysticks erfolgen und zwar gemäß einer automatischen Vorgabe der räumlichen Zuordnung der Freiheitsgrade gemäß der Orientierung des Robotersteuerpults, beispielsweise bezüglich des Roboterarms.
- Wenn das Roboter-Bedienhandgerät sich außerhalb des Robotersteuerpults befindet und/oder sich in einer Hand eines Benutzers befindet, kann ein Drehzentrums der 3D/6D-Maus oder des Joysticks gemäß einer Benutzervorgabe erfolgen. Wird anschließend das Roboter-Bedienhandgerät wieder in das Robotersteuerpult eingesetzt, dann kann automatisch ein Vorschlag einer sinnvollen Auswahl an Drehzentren für die 3D/6D-Maus oder für den Joystick angezeigt und/oder ausgegeben werden, welche konkrete Auswahl dann vorzugsweise noch durch eine Quittierungseingabe manuell zu bestätigen wäre.

Des Weiteren sind beispielsweise folgende automatische Funktionsvorwahlszenarien beim Herausnehmen des Roboter-Bedienhandgeräts aus dem Robotersteuerpult möglich:
- Wenn das Roboter-Bedienhandgerät von dem Robotersteuerpult aufgenommen ist, d.h. das Roboter-Bedienhandgerät in das Robotersteuerpult eingesetzt ist, d.h. das Roboter-Bedienhandgerät nicht mehr von einer Hand eines Benutzers getragen ist, kann sich der Programmablauf im Automatikmodus befinden. Wird anschließend das Roboter-Bedienhandgerät wieder von dem Robotersteuerpult entfernt, d.h. wieder aus dem Robotersteuerpult herausgenommen, dann können automatisch ein Vorschlag oder mehrere Vorschläge zur Auswahl an dem Robotersteuerpult und/oder an dem Roboter-Bedienhandgerät angezeigt und/oder ausgegeben werden, die dann konkret manuell ausgewählt werden können, vorzugsweise noch durch eine Quittierungseingabe manuell bestätigt. Ein oder mehrere solche Vorschläge können beispielsweise Fragen sein danach, ob ein Umschalten in einen Handfahrbetrieb des Roboters aktiviert werden soll, ob eine Unterbrechung des Roboterbetriebs aktiviert werden soll, ob ein aktiviertes Roboterprogramm abgewählt werden soll, und/oder ob ein neues Roboterprogramm, bzw. ein anderes Roboterprogramm ausgewählt werden.
- Wenn das Roboter-Bedienhandgerät von dem Robotersteuerpult aufgenommen ist, d.h. das Roboter-Bedienhandgerät in das Robotersteuerpult eingesetzt ist, d.h. das Roboter-Bedienhandgerät nicht mehr von einer Hand eines Benutzers getragen ist, kann im Falle des Auftretens eines Fehlers in einem Roboterprogramm ein Fehlerbehebungsprogramm (Debug-Modus) gestartet werden. Dazu kann das Roboter-Bedienhandgerät wieder von dem Robotersteuerpult entfernt werden, d.h. wieder aus dem Robotersteuerpult herausgenommen werden, und das Aktivieren des Fehlerbehebungsprogramm insbesondere automatisch oder manuell bestätigt werden.
- Wenn das Roboter-Bedienhandgerät von dem Robotersteuerpult aufgenommen ist, d.h. das Roboter-Bedienhandgerät in das Robotersteuerpult eingesetzt ist, d.h. das Roboter-Bedienhandgerät nicht mehr von einer Hand eines Benutzers getragen ist, kann ein Automatikmodus aktiviert sein, in dem der Roboter in hoher Geschwindigkeit betrieben werden kann. Wird anschließend das Roboter-Bedienhandgerät wieder von dem Robotersteuerpult entfernt, d.h. wieder aus dem Robotersteuerpult herausgenommen, dann kann automatisch ein Umschalten in einen sicheren Modus und/oder in einen langsamen Mensch-Maschine-Kollaborations(MRK)-Modus erfolgen.
- Wenn das Roboter-Bedienhandgerät von dem Robotersteuerpult aufgenommen ist, d.h. das Roboter-Bedienhandgerät in das Robotersteuerpult eingesetzt ist, d.h. das Roboter-Bedienhandgerät nicht mehr von einer Hand eines Benutzers getragen ist, kann automatisch ein Sicherheitszugang zu einer zugeordneten Roboterzelle geschlossen werden. Wird anschließend das Roboter-Bedienhandgerät wieder von dem Robotersteuerpult entfernt, d.h. wieder aus dem Robotersteuerpult herausgenommen, dann kann beispielsweise eine Schleuse, ein Tor und/oder eine Tür der Roboterzelle automatisch geöffnet werden und die Robotergeschwindigkeit entsprechend angepasst werden oder der Roboter ganz stillgesetzt, d.h. angehalten werden.

Zusammenfassend kann mit der vorliegenden Erfindung eine intelligente "Docking-Station" geschaffen werden, welche die Verwendung des Roboter-Bedienhandgeräts auf Basis eines optionalen Tablet-Computers im Sekundärbereich des Lagerns, des Aufbewahrens und/oder des Bereitstellens deutlich vereinfacht und die Benutzerfreundlichkeit und Effizienz signifikant erhöht. Hierzu können eine Reihe von hilfreichen Funktionen integriert werden, ohne die Komplexität und damit die Kosten des Robotersteuerpult wesentlich zu erhöhen. Sowohl das Roboter-Bedienhandgerät als auch das Robotersteuerpult können jeweils einzeln mit gewissem Funktionsumfang, aber auch im zusammengesetzten, d.h. verbundenen Zustand genutzt werden. Durch Verbinden und/oder Entnehmen des Roboter-Bedienhandgeräts können automatisch Befehle an die Robotersteuerung übertragen werden.

Verschiedene Ausführungsbeispiele der Erfindung sind exemplarisch in den beigefügten schematischen Zeichnungen dargestellt. Konkrete Merkmale dieser Ausführungsbeispiele können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
- Fig. 1: eine perspektivische Ansicht eines beispielhaften Robotersteuerpults in Alleinstellung, d.h. bei entnommenem Roboter-Bedienhandgerät,
- Fig. 2: eine perspektivische Ansicht des Robotersteuerpults gemäß Fig. 1 mit einem Roboter-Bedienhandgerät, dargestellt während eines Aufnehmens des Roboter-Bedienhandgeräts in das Robotersteuerpult,
- Fig. 3: eine perspektivische Ansicht des Robotersteuerpults gemäß Fig. 1 mit vollständig aufgenommenem Roboter-Bedienhandgerät,
- Fig. 4: eine perspektivische Ansicht des Robotersteuerpults gemäß Fig. 1 mit vollständig aufgenommenem Roboter-Bedienhandgerät und einer dargestellten Hand eines Benutzers vor einem Herausnehmen des Roboter-Bedienhandgeräts aus dem Robotersteuerpult,
- Fig. 5: eine perspektivische Ansicht des Robotersteuerpults gemäß Fig. 1 von hinten mit vollständig aufgenommenem Roboter-Bedienhandgerät und umgreifender Hand,
- Fig. 6: eine perspektivische Ansicht des Robotersteuerpults gemäß Fig. 1 mit einem multifunktionalen Steckplatz für drei Varianten von alternativen Steckeinheiten,
- Fig. 7: eine perspektivische Ansicht eines Tragarms, an dem das Robotersteuerpults gemäß Fig. 1 gelagert ist,
- Fig.: 8 eine Gesamtschau dreier Varianten, nämlich mit einem Standfuß, einem Wandhalter und einem Fahrstativ zur Lagerung des Robotersteuerpults,
- Fig.: 9 ein erstes Roboterbedienszenario, bei dem das Robotersteuerpult mit eingesetztem Roboter-Bedienhandgerät mittels eines Tragarms an einem Steuerschrank einer Robotersteuerung verstellbar gelagert ist,
- Fig.: 10 ein zweites Roboterbedienszenario, bei dem das Robotersteuerpult mit eingesetztem Roboter-Bedienhandgerät an einem Fahrstativ getrennt von der Robotersteuerung verfahrbar gelagert ist,
- Fig.: 11 ein drittes Roboterbedienszenario, bei dem das Robotersteuerpult mit eingesetztem Roboter-Bedienhandgerät an einem Standfuß getrennt von der Robotersteuerung auf einem Boden aufgestellt ist, und
- Fig.: 12 ein viertes Roboterbedienszenario, bei dem das Robotersteuerpult mit eingesetztem Roboter-Bedienhandgerät mittels eines Standfußes auf einer Tischplatte aufgestellt ist.

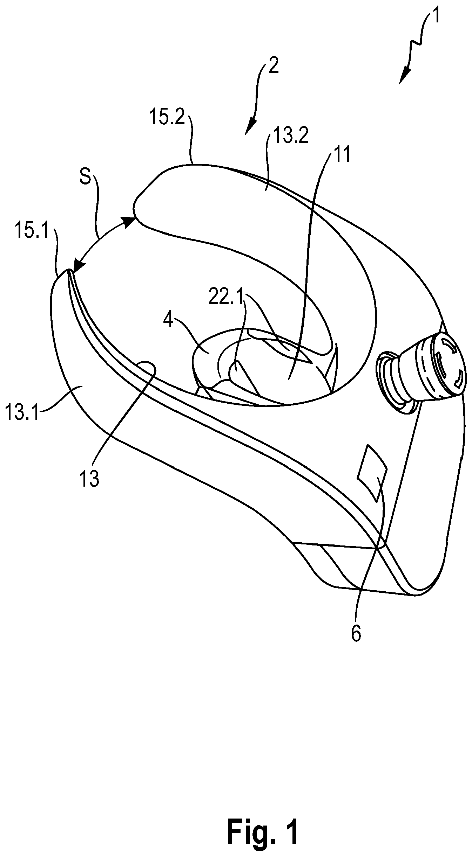

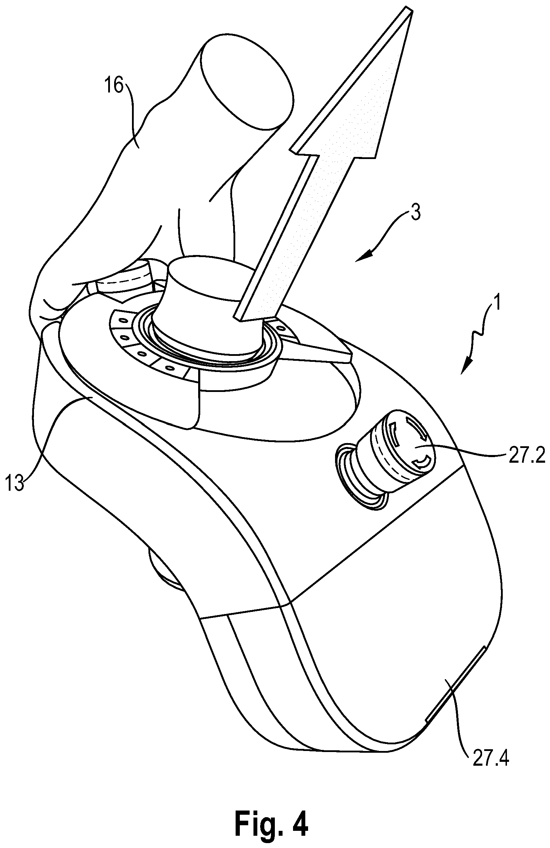

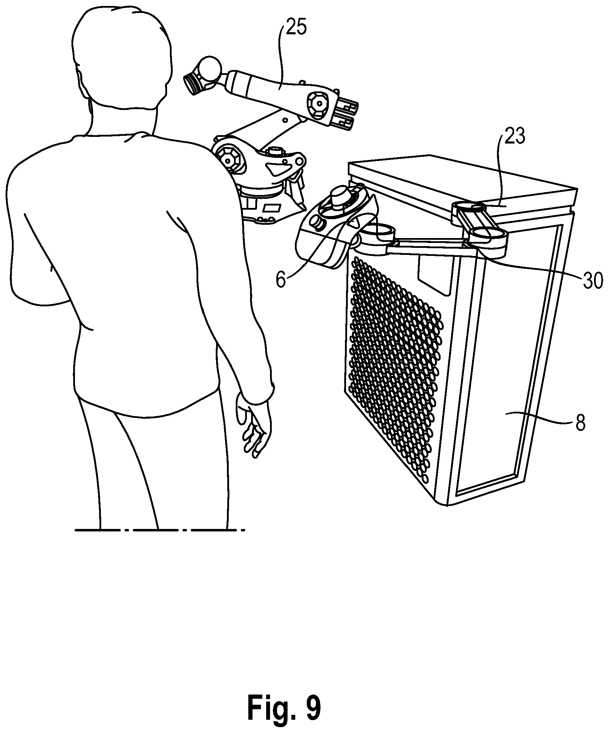

Die Fig. 1 bis Fig. 6 zeigen ein beispielhaftes Robotersteuerpult 1. Das Robotersteuerpult 1 weist einen Halter 2 auf, der zum formschlüssigen Aufnehmen eines aus dem Robotersteuerpult 1 entnehmbaren, separat tragbaren Roboter-Bedienhandgeräts 3 ausgebildet ist. Das Robotersteuerpult 1 weist außerdem eine elektrische Ladevorrichtung 4 auf, die ausgebildet ist zum Aufladen eines wiederaufladbaren elektrischen Energiespeichers 5 des Roboter-Bedienhandgeräts 3 in einem an dem Robotersteuerpult 1 aufgenommenen Zustand des Roboter-Bedienhandgeräts 3, und eine Kommunikationsvorrichtung 6, die ausgebildet ist, eine Bedienhandgerätesteuerung 7 des Roboter-Bedienhandgeräts 3 mit einer Robotersteuerung 8 (Fig. 9) steuerungstechnisch zu verbinden.

Der Halter 2 weist im Falle des vorliegenden Ausführungsbeispiels mehrere Rastmittel 9 auf, die jeweils ausgebildet sind, mit jeweils einem von mehreren zum Rastmittel 9 korrespondierenden Gegenrastmitteln 10 des Roboter-Bedienhandgeräts 3 in einem an dem Robotersteuerpult 1 aufgenommenen Zustand des Roboter-Bedienhandgeräts 3 zusammenzuwirken, derart, dass das Roboter-Bedienhandgerät 3 in seinem an dem Robotersteuerpult 1 aufgenommenen Zustand wahlweise eine von mehreren fest vorgegebenen, eindeutigen Orientierungen relativ zum Robotersteuerpult 1 einnimmt.

Der Halter 2 weist im Falle des vorliegenden Ausführungsbeispiels außerdem eine Tasche 11 auf, deren Innenfläche eine zu einem Griffabschnitt 12 des Roboter-Bedienhandgeräts 3 korrespondierende Gestalt aufweist, derart, dass in einem an dem Robotersteuerpult 1 aufgenommenen Zustand des Roboter-Bedienhandgeräts 3 dessen Griffabschnitt 12 formschlüssig in der Tasche 11 des Robotersteuerpults 1 aufgenommen ist.

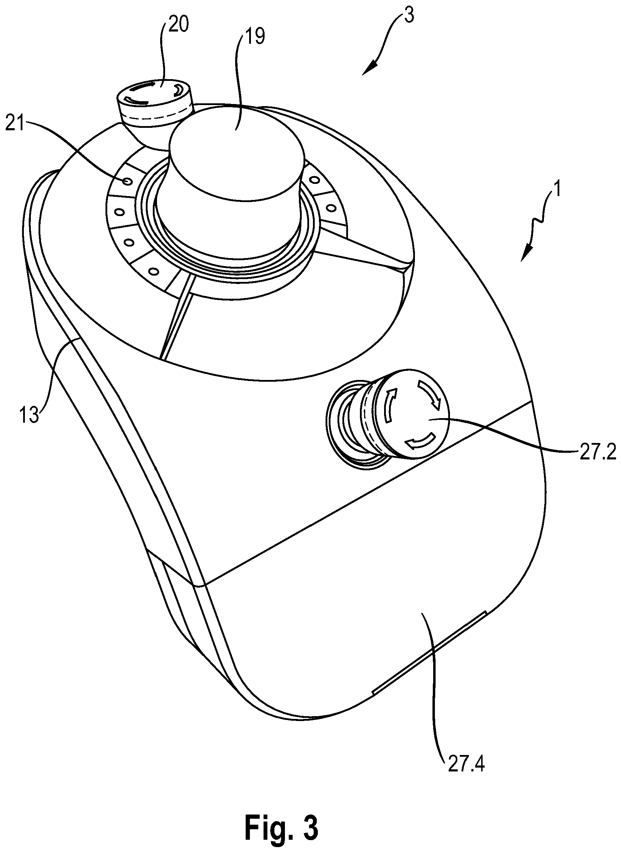

Der Halter 2 weist außerdem eine radial offene Ringaufnahme 13 auf, derart, dass die Ringaufnahme 13 einen Gehäuseabschnitt 14 des Roboter-Bedienhandgeräts 3 in einem an dem Robotersteuerpult 1 aufgenommenen Zustand des Roboter-Bedienhandgeräts 3 formschlüssig umgreift, wie dies insbesondere in Fig. 3 bis Fig. 5 dargestellt ist, wobei die Ringaufnahme 13 einen den Gehäuseabschnitt 14 des Roboter-Bedienhandgeräts 3 über einen Teilumfang umgreifenden ersten Schenkelabschnitt 13.1 aufweist und einen dem ersten Schenkelabschnitt 13.1 gegenüberliegenden zweiten Schenkelabschnitt 13.2 aufweist, der den Gehäuseabschnitt 14des Roboter-Bedienhandgeräts 3 über einen anderen Teilumfang umgreift, und ein erstes freies Ende 15.1 des ersten Schenkelabschnitts 13.1 beabstandet zu einem zweiten freien Ende 15.2 des zweiten Schenkelabschnitts 13.2 angeordnet ist, wie beispielsweise in Fig. 1 gezeigt, so dass zwischen den beiden freien Enden 15.1 und 15.2 ein Durchgriffspalt S gebildet wird (Fig.1, Fig. 4 und Fig. 5), über den das Roboter-Bedienhandgerät 3 trotz seines an dem Robotersteuerpult 1 aufgenommenen Zustands mit einer Hand 16 hintergriffen werden kann, um eine Rückseite 17 des Gehäuseabschnitts 14 des Roboter-Bedienhandgeräts 3 manuell erfassen zu können.

Das Roboter-Bedienhandgerät 3 weist im Falle des vorliegenden Ausführungsbeispiels ein im wesentlichen kreiszylindrisches Hauptgehäuse 18 auf. An diesem kreiszylindrischen Hauptgehäuse 18 erstreckt sich an dessen Bodenseite der Griffabschnitt 12 vertikal nach unten. An einer Oberseite des kreiszylindrischen Hauptgehäuses 18 kann eine 3D/6D-Maus 19, ein Notaus-Taster 20 und/oder ein Betriebsartenwahlschalter 21 angeordnet sein. Die offene Ringaufnahme 13 des Halters 2 des Robotersteuerpults 1 kann ausgebildet sein, das kreiszylindrische Hauptgehäuse 18 des Roboter-Bedienhandgeräts 3 zu umfassen, wenn das Roboter-Bedienhandgerät 3 in das Robotersteuerpult 1 eingesetzt ist.

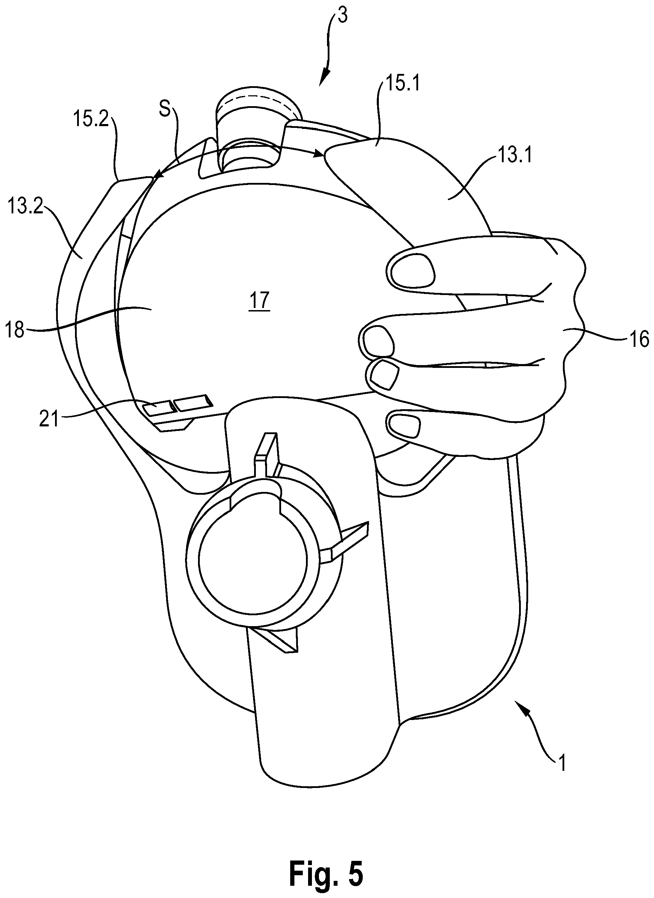

Der erste Schenkelabschnitt 13.1 der Ringaufnahme 13 fasst das kreiszylindrische Hauptgehäuse 18 des Roboter-Bedienhandgeräts 3 rechtsseitig ein und der zweite Schenkelabschnitt 13.2 der Ringaufnahme 13 fasst das kreiszylindrische Hauptgehäuse 18 des Roboter-Bedienhandgeräts 3 linksseitig ein, wobei das erste freie Ende 15.1 des ersten Schenkelabschnitts 13.1 in einem Abstand S vom zweiten freien Ende 15.2 des zweiten Schenkelabschnitts 13.2 angeordnet ist. Zwischen dem ersten freien Ende 15.1 des ersten Schenkelabschnitts 13.1 und dem zweiten freien Ende 15.2 des zweiten Schenkelabschnitts 13.2 wird demgemäß eine radiale Öffnung der Ringaufnahme 13 gebildet. Die radiale Öffnung der Ringaufnahme 13 erlaubt es einem Benutzer mit seiner Hand 16 das kreiszylindrische Hauptgehäuse 18 des Roboter-Bedienhandgeräts 3 bis zu einer Rückseite 17 zu umfassen, ohne dass der Halter 2 bzw. die Ringaufnahme 13 ein Erfassen des Roboter-Bedienhandgeräts 3 in diesem Bereich verhindern würde. Dadurch kann beispielsweise auf einen an der Rückseite 17 des kreiszylindrischen Hauptgehäuses 18 des Roboter-Bedienhandgeräts 3 angeordneten Zustimmtaster 21 manuell mit der Hand 16 zugegriffen werden, selbst wenn das Roboter-Bedienhandgerät 3 in dem Robotersteuerpult 1 eingesetzt ist, wie dies insbesondere in Fig. 5 aufgezeigt ist. Unabhängig davon ist eine Entnahme des Roboter-Bedienhandgerät 3 aus dem Robotersteuerpult 1 mit der Hand 16 dadurch generell erleichtert.

Die elektrische Ladevorrichtung 4 weist im Falle des vorliegenden Ausführungsbeispiels eine erste elektrische Kontaktanordnung 22.1 auf, die in einem an dem Robotersteuerpult 1aufgenommenen Zustand des Roboter-Bedienhandgeräts 3 an eine zweite elektrische Kontaktanordnung 22.2 des Roboter-Bedienhandgeräts 3 elektrisch kontaktiert ist, zum Aufladen des wiederaufladbaren elektrischen Energiespeichers 5 des Roboter-Bedienhandgeräts 3 in seinem an dem Robotersteuerpult 1 aufgenommenen Zustand.

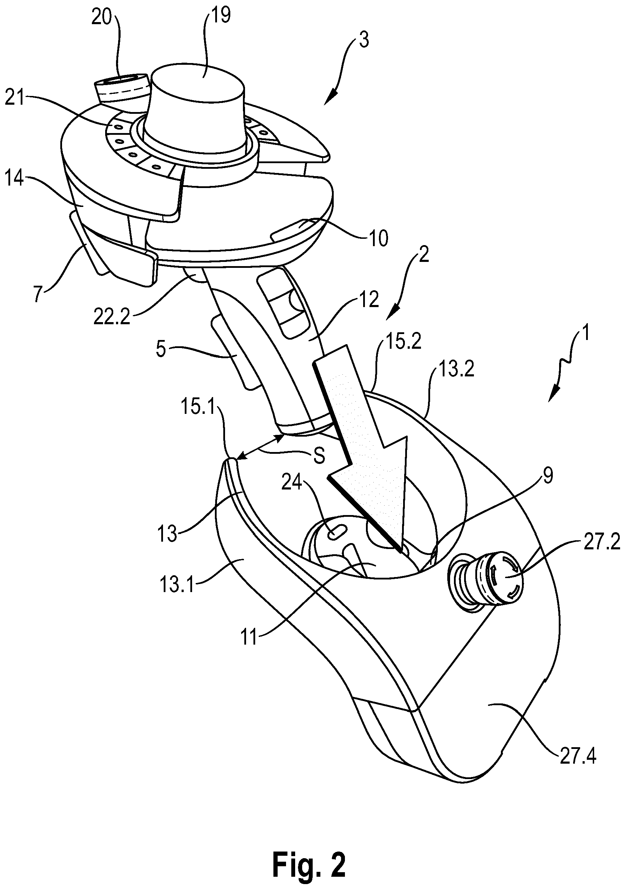

Die Kommunikationsvorrichtung 6 des Robotersteuerpults 1 ist, wie insbesondere in Fig. 9, Fig. 10 und Fig. 12 aufgezeigt, mittels einer Kommunikationsverbindung 23 mit der Robotersteuerung 8 steuerungstechnisch verbunden. Die Kommunikationsvorrichtung 6 weist außerdem einen Sensor 24 auf (Fig. 2), der ausgebildet ist, ein an dem Robotersteuerpult 1 aufgenommenes Roboter-Bedienhandgerät 3 zu identifizieren.

Die Kommunikationsvorrichtung 6 ist außerdem ausgebildet, das durch den Sensor 24 identifizierte Roboter-Bedienhandgerät 3 bei der Robotersteuerung 8 als ein Handsteuergerät zum Ansteuern eines von der Robotersteuerung 8 gesteuerten Roboterarms 25 anzumelden.

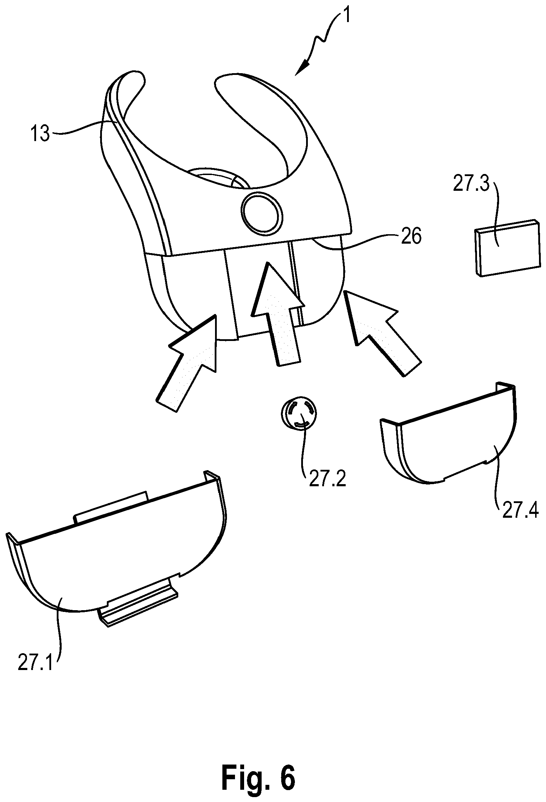

Das Robotersteuerpult 1 kann, wie in Fig. 6 aufgezeigt, einen multifunktionalen Steckplatz 26 aufweisen, der ausgebildet ist, wahlweise einen von wenigstens zwei alternativen Steckeinheiten 27 aus der Gruppe der Steckeinheiten 27 Tablet-Computerhalter 27.1, Zusatzeingabemittel 27.2, drahtloser Sender und/oder Empfänger 27.3, elektrische Anschlussbuchse und Blendenkappe 27.4, manuell lösbar aufzunehmen. So zeigen insbesondere die Fig. 2 bis Fig. 4 das Robotersteuerpult 1 mit einer aufgesetzten Blendenkappe 27.4 und einem aufgesetzten Zusatzeingabemittel 27.2.

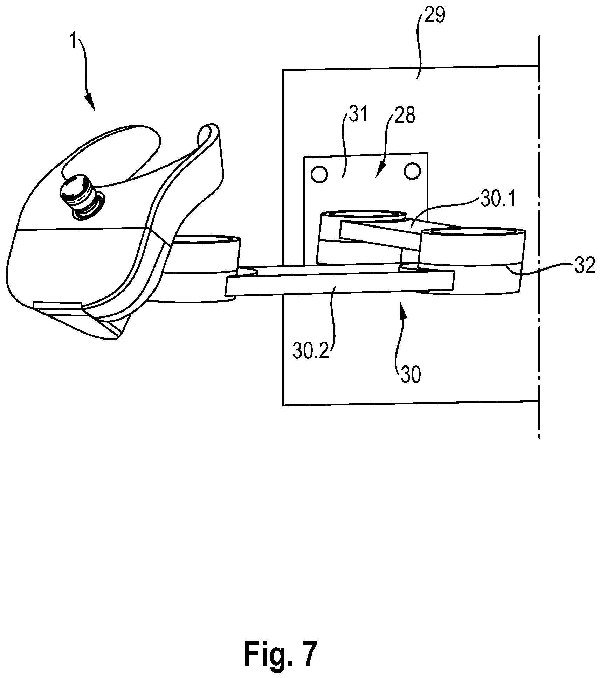

In einer ersten weiterführenden Ausgestaltung gemäß Fig. 7 kann das Robotersteuerpult 1 einen Wandhalter 28 aufweisend, der ausgebildet ist zur Befestigung des Robotersteuerpults 1 an einer vertikalen Wand 29. Das Robotersteuerpult 1 kann dabei optional über einen Tragarm 30 mit dem Wandhalter 28 verbunden sein.

Der Tragarm 30 kann wenigstens ein erstes Glied 30.1 aufweist, das eine Befestigungsvorrichtung 31 zum ortsfesten installieren des Tragarms 30 aufweist, und ein zweites Glied 30.2 aufweisen, an dem das Robotersteuerpult 1 gelagert ist, wobei das erste Glied 30.1 mit dem zweiten Glied 30.2 über wenigstens ein Gelenk 32 gegeneinander verstellbar verbunden sind, derart, dass durch Verstellen des wenigstens einen Gelenks 32 das Robotersteuerpult 1 in seiner räumlichen Position und/oder Lage bezüglich der ortsfesten Befestigungsvorrichtung 31 verstellt werden kann.

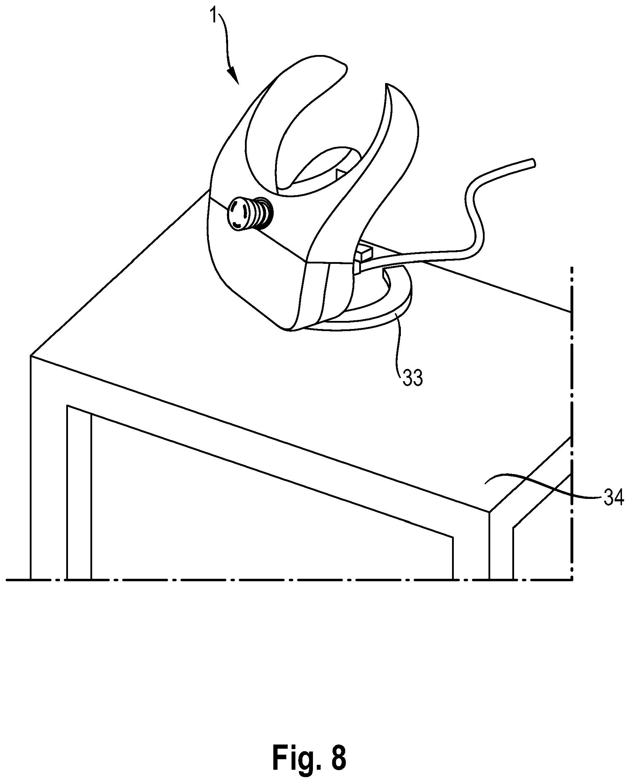

In einer zweiten weiterführenden Ausgestaltung gemäß Fig.8 kann das Robotersteuerpult 1 einen Standfuß 33 aufweisen, der ausgebildet ist, zum Halten des Robotersteuerpults 1 auf einer Standfläche 34 und zum Sichern des Robotersteuerpults 1 gegen Umkippen.

In einer dritten weiterführenden Ausgestaltung gemäß Fig.9 kann das Robotersteuerpult 1 mittels eines Tragarms 30 an einem Steuerschrank der Robotersteuerung 8 des Roboterarms 25 gelenkig gelagert sein.

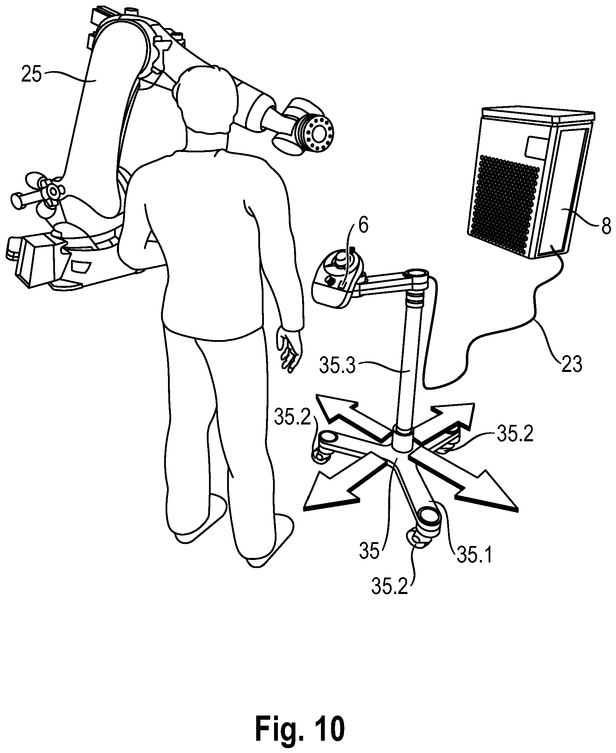

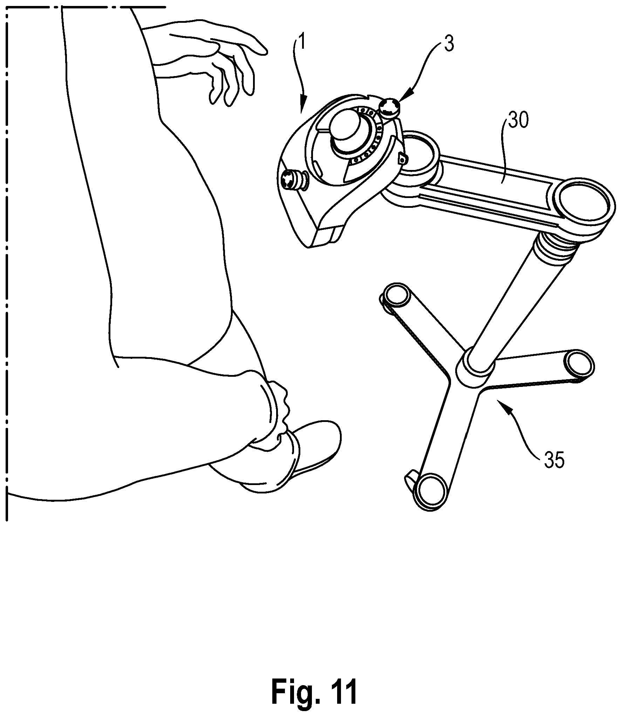

In einer vierten weiterführenden Ausgestaltung gemäß Fig.10 kann das Robotersteuerpult 1 ein Fahrstativ 35 aufweisen, das ein Fahrwerk 35.1 mit wenigstens drei Rädern 35.2 und eine am Fahrwerk 35.1 gelagerte Tragsäule 35.3 umfasst, an der das Robotersteuerpult 1 befestigt ist. Wie in Fig. 11 gezeigt, kann das Robotersteuerpult 1 auch über einen gelenkigen Tragarm 30 mit dem Fahrstativ 35 verbunden sein.

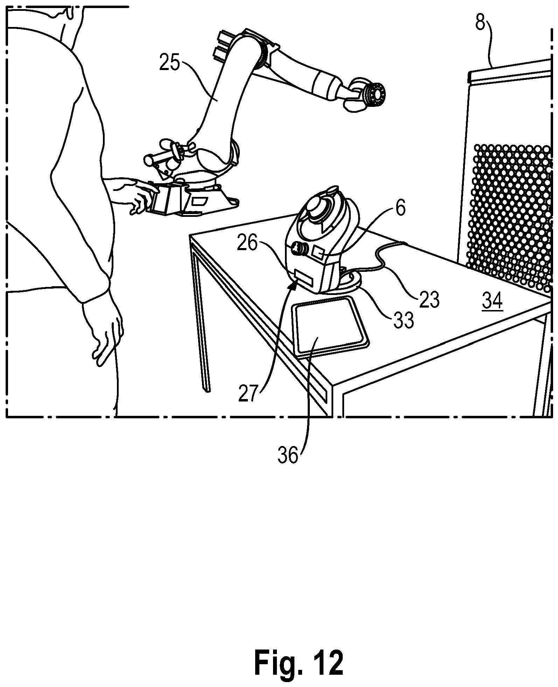

Die Fig. 12 zeigt nochmals eine Variante, bei der das Robotersteuerpult 1 einen Standfuß 33 aufweist, der ausgebildet ist, zum Halten des Robotersteuerpults 1 auf einer Standfläche 34. In dieser Variante ist an dem multifunktionalen Steckplatz 26 eine Steckeinheit 27 in Art eines drahtlosen Internetzugriffspunktes (WLAN-Hotspot) angesteckt, über den ein Tablet-Computer 36 steuerungstechnisch mit dem Robotersteuerpult 1, mit dem in das Robotersteuerpult 1 eingesetzten Roboter-Bedienhandgerät 3 und/oder mit der Robotersteuerung 8 verbunden werden kann.

## Patentansprüche

1. Robotersteuerpult, aufweisend:
- einen Halter (2), der zum formschlüssigen Aufnehmen eines aus dem Robotersteuerpult (1) entnehmbaren, separat tragbaren Roboter-Bedienhandgeräts (3) ausgebildet ist, wobei der Halter (2) mehrere Rastmittel (9) aufweist, die jeweils ausgebildet sind, mit jeweils einem von mehreren zum Rastmittel (9) korrespondierenden Gegenrastmitteln (10) des Roboter-Bedienhandgeräts (3) in einem an dem Robotersteuerpult (1) aufgenommenen Zustand des Roboter-Bedienhandgeräts (3) zusammenzuwirken, derart, dass das Roboter-Bedienhandgerät (3) in den an dem Robotersteuerpult (1) aufgenommenen Zuständen wahlweise in einer von mehreren fest vorgegebenen, eindeutigen Orientierungen relativ zum Robotersteuerpult (1) aufgenommen ist,
- einen Sensor (24), der ausgebildet ist, ein individuelles in das Robotersteuerpult (1) eingesetztes Roboter-Bedienhandgerät (3) zu identifizieren, und
- eine Kommunikationsvorrichtung (6), die ausgebildet ist, eine Bedienhandgerätesteuerung (7) des eingesetzten Roboter-Bedienhandgeräts (3) in Abhängigkeit des vom Sensor (24) identifizierten individuellen Roboter-Bedienhandgeräts (3) mit einer dem individuellen Roboter-Bedienhandgerät (3) zugeordneten Robotersteuerung (8) steuerungstechnisch zu verbinden.

2. Robotersteuerpult nach Anspruch 1, **dadurch gekennzeichnet, dass** der Halter (2) eine Tasche (11) aufweist, deren Innenfläche eine zu einem Griffabschnitt (12) des Roboter-Bedienhandgeräts (3) korrespondierende Gestalt aufweist, derart, dass in einem an dem Robotersteuerpult (1) aufgenommenen Zustand des Roboter-Bedienhandgeräts (3) dessen Griffabschnitt (12) formschlüssig in der Tasche (11) des Robotersteuerpults (1) aufgenommen ist.

3. Robotersteuerpult nach Anspruch 1 oder 2, **dadurch gekennzeichnet, dass** der Halter (2) eine radial offene Ringaufnahme (13) aufweist, derart, dass die Ringaufnahme (13) einen Gehäuseabschnitt (14) des Roboter-Bedienhandgeräts (3) in einem an dem Robotersteuerpult (1) aufgenommenen Zustand des Roboter-Bedienhandgeräts (3) formschlüssig umgreift, wobei die Ringaufnahme (13) einen den Gehäuseabschnitt (14) des Roboter-Bedienhandgeräts (3) über einen Teilumfang umgreifenden ersten Schenkelabschnitt (13.1) aufweist und einen dem ersten Schenkelabschnitt (13.1) gegenüberliegenden zweiten Schenkelabschnitt (13.2) aufweist, der den Gehäuseabschnitt (14) des Roboter-Bedienhandgeräts (3) über einen anderen Teilumfang umgreift, und ein erstes freies Ende (15.1) des ersten Schenkelabschnitts (13.1) beabstandet zu einem zweiten freien Ende (15.2) des zweiten Schenkelabschnitts (13.2) angeordnet ist, so dass zwischen den beiden freien Enden (15.1, 15.2) ein Durchgriffspalt (S) gebildet wird, über den das Roboter-Bedienhandgerät (3) trotz seines an dem Robotersteuerpult (1) aufgenommenen Zustands hintergriffen werden kann, um eine Rückseite (17) des Gehäuseabschnitt (14) des Roboter-Bedienhandgeräts (3) manuell erfassen zu können.

4. Robotersteuerpult nach einem der Ansprüche 1 bis 3, **gekennzeichnet durch** eine elektrische Ladevorrichtung (4), die ausgebildet ist zum Aufladen eines wiederaufladbaren elektrischen Energiespeichers (5) des Roboter-Bedienhandgeräts (3) in einem an dem Robotersteuerpult (1) aufgenommenen Zustand des Roboter-Bedienhandgeräts (3).

5. Robotersteuerpult nach Anspruch 4, **dadurch gekennzeichnet, dass** die elektrische Ladevorrichtung (4) eine erste elektrische Kontaktanordnung (22.1) aufweist, die in einem an dem Robotersteuerpult (1) aufgenommenen Zustand des Roboter-Bedienhandgeräts (3) an eine zweite elektrische Kontaktanordnung (22.2) des Roboter-Bedienhandgeräts (3) elektrisch kontaktiert ist, zum Aufladen des wiederaufladbaren elektrischen Energiespeichers (5) des Roboter-Bedienhandgeräts (3) in seinem an dem Robotersteuerpult (1) aufgenommenen Zustand.

6. Robotersteuerpult nach Anspruch 4, **dadurch gekennzeichnet, dass** die elektrische Ladevorrichtung (4) induktive Übertragungsbauelemente aufweist, welche zur kontaktlosen Übertragung der elektrischen Energie von dem Robotersteuerpult (1) auf das Roboter-Bedienhandgerät (3) ausgebildet sind.

7. Robotersteuerpult nach einem der Ansprüche 1 bis 6, **dadurch gekennzeichnet, dass** die Kommunikationsvorrichtung (6) mittels einer Kommunikationsverbindung (23) mit einer Robotersteuerung (8) steuerungstechnisch verbunden ist, und die Kommunikationsvorrichtung (6) wenigstens einen Sensor (24) aufweist, der ausgebildet ist, ein an dem Robotersteuerpult (1) aufgenommenes Roboter-Bedienhandgerät (3) zu identifizieren, und die Kommunikationsvorrichtung (6) ausgebildet ist, das durch den Sensor (24) identifizierte Roboter-Bedienhandgerät (3) bei der Robotersteuerung (8) als ein Handsteuergerät zum Ansteuern eines von der Robotersteuerung (8) gesteuerten Roboterarms (25) anzumelden.

8. Robotersteuerpult nach einem der Ansprüche 1 bis 7, aufweisend einen multifunktionalen Steckplatz (26), der ausgebildet ist, wahlweise einen von wenigstens zwei alternativen Steckeinheiten (27) aus der Gruppe der Steckeinheiten (27) Tablet-Computerhalter (27.1), Zusatzeingabemittel (27.2), drahtloser Sender und/oder Empfänger (27.3), elektrische Anschlussbuchse und Blendenkappe (27.4), manuell lösbar aufzunehmen.

9. Robotersteuerpult nach einem der Ansprüche 1 bis 8, aufweisend einen Wandhalter (28), der zur Befestigung des Robotersteuerpults (1) an einer vertikalen Wand (29) ausgebildet ist.

10. Robotersteuerpult nach einem der Ansprüche 1 bis 8, aufweisend ein Fahrstativ (35), das ein Fahrwerk (35.1) mit wenigstens drei Rädern (35.2) und eine am Fahrwerk (35.1) gelagerte Tragsäule (35.3) umfasst, an der das Robotersteuerpult (1) befestigt ist.

11. Robotersteuerpult nach einem der Ansprüche 1 bis 10, aufweisend einen Tragarm (30), der wenigstens ein erstes Glied (30.1) aufweist, das eine Befestigungsvorrichtung (31) zum insbesondere ortsfesten installieren des Tragarms (30) aufweist, und ein zweites Glied (30.2) aufweist, an dem das Robotersteuerpult (1) befestigt ist, wobei das erste Glied (30.1) mit dem zweiten Glied (30.2) über wenigstens ein Gelenk (32) gegeneinander verstellbar verbunden sind, derart, dass durch Verstellen des wenigstens einen Gelenks (32) das Robotersteuerpult (1) in seiner räumlichen Position und/oder Lage bezüglich der Befestigungsvorrichtung (31) verstellt werden kann.

12. Robotersteuerpult nach einem der Ansprüche 1 bis 11, aufweisend einen Standfuß (33), der ausgebildet ist, zum Halten des Robotersteuerpults (1) auf einer Standfläche (34) und zum Sichern des Robotersteuerpults (1) gegen Umkippen.

## Claims

1. Robot control panel, comprising:
- a holder (2) which is designed for form-fitting receiving of a separately portable handheld robot control device (3) which can be removed from the robot control panel (1), the holder (2) having a plurality of locking means (9), each of which are designed to cooperate with one of several counter-locking means (10) of the handheld robot operating device (3) corresponding to the locking means (9) in a state of the handheld robot operating device (3) received on the robot control panel (1), such that the robot control handset (3) in the states received on the robot control panel (1) is optionally received in one of several fixed, unambiguous orientations relative to the robot control panel (1),
- a sensor (24) which is designed to identify an individual robot operating hand-held device (3) inserted into the robot control panel (1), and
- a communication device (6) which is designed to connect a handheld control unit (7) of the inserted handheld robot control device (3) depending on the individual hand-held robot operating device (3) identified by the sensor (24) with one of the individual robot hand-held operating device (3) assigned to the robot controller (8) in terms of control.

2. Robot control panel according to Claim 1, **characterized in that** the holder (2) has a pocket (11), the inner surface of which has a shape corresponding to a handle section (12) of the robot control hand-held device (3), such that in a state of the robot control hand-held device (3) recorded on the robot control panel (1), its grip section (12) is received in a form-fitting manner in the pocket (11) of the robot control panel (1).

3. Robot control panel according to Claim 1 or 2, **characterized in that** the holder (2) has a radially open ring holder (13) such that the ring holder (13) adjoins a housing section (14) of the robot control hand-held device (3) the robot control panel (1) recorded state of the robot hand-held device (3) positively encompasses, the ring holder (13) encompassing a first leg section encompassing the housing section (14) of the hand-held robot device (3) over a partial circumference (13.1) and a second leg section (13.2) opposite the first leg section (13.1), which surrounds the housing section (14) of the handheld robot control device (3) over a different partial circumference, and a first free end (15.1) of the first leg section (13.1) is arranged at a distance from a second free end (15.2) of the second leg section (13.2), so that a reach-through gap (S) is formed between the two free ends (15.1, 15.2), via which the robot handheld device (3) can be accessed from behind despite its state recorded on the robot control panel (1) in order to be able to manually detect a rear side (17) of the housing section (14) of the robot handheld device (3) .

4. Robot control panel according to one of Claims 1 to 3, **characterized by** an electrical charging device (4) which is designed to charge a rechargeable electrical energy store (5) of the robot control hand-held device (3) in a receiving state on the robot control panel (1) Robot handheld device (3).

5. Robot control panel according to Claim 4, **characterized in that** the electrical charging device (4) has a first electrical contact arrangement (22.1) which, when the robot control panel (3) is recorded on the robot control panel (1), is connected to a second electrical contact Contact arrangement (22.2) of the robot hand-held device (3) is electrically contacted, for charging the rechargeable electrical energy store (5) of the hand-held robot device (3) in its receiving state on the robot control panel (1).

6. Robot control panel according to claim 4, **characterized in that** the electrical charging device (4) has inductive transmission components which are designed for the contactless transmission of electrical energy from the robot control panel (1) to the robot control hand-held device (3).

7. Robot control panel according to one of Claims 1 to 6, **characterized in that** the communication device (6) is connected to a robot controller (8) by means of a communication connection (23), and the communication device (6) is at least one sensor (24) which is designed to identify a robot control hand-held device (3) received on the robot control panel (1), and the communication device (6) is designed to identify the robot control hand-held device (24) identified by the sensor (24). 3) to register with the robot control (8) as a manual control device for controlling a robot arm (25) controlled by the robot control (8).

8. Robot control panel according to one of Claims 1 to 7, having a multifunctional slot (26) which is designed to optionally include one of at least two alternative plug-in units (27) from the group of plug-in units (27), tablet computer holder (27.1), additional input means ( 27.2), wireless transmitter and / or receiver (27.3), electrical connection socket and cover cap (27.4), manually detachable.

9. Robot control panel according to one of Claims 1 to 8, having a wall bracket (28) which is designed for fastening the robot control desk (1) to a vertical wall (29) .

10. Robot control panel according to one of Claims 1 to 8, having a mobile stand (35) which comprises a chassis (35.1) with at least three wheels (35.2) and a support column (35.3) mounted on the chassis (35.1), on which the robot control panel (1) is attached.

11. Robot control panel according to one of Claims 1 to 10, having a support arm (30) which has at least one first member (30.1) which has a fastening device (31) for installing the support arm (30) in particular in a stationary manner, and a second member (30.2) on which the robot control panel (1) is mounted, wherein the first member (30.1) is adjustably connected with the second member (30.2) via at least one joint (32), such that the robot control panel (1) can be adjusted in its spatial position and / or location with respect to the fastening device (31) by adjusting the at least one joint (32).

12. Robot control panel according to one of Claims 1 to 11, having a stand (33) which is designed to hold the robot control desk (1) on a standing surface (34) and to secure the robot control desk (1) against tipping over.

## Revendications

1. Panneau de commande du robot, comprenant:
- un support (2) qui est conçu pour recevoir par ajustement de forme un dispositif de commande de robot portatif séparément (3) qui peut être retiré du panneau de commande de robot (1), le support (2) ayant une pluralité de des moyens de verrouillage (9), dont chacun est conçu pour coopérer avec l'un de plusieurs moyens de contre-verrouillage (10) du dispositif de commande de robot portable (3) correspondant au moyen de verrouillage (9) dans un état du robot portable dispositif de commande (3) reçu sur le panneau de commande du robot (1), de telle sorte que le combiné de commande du robot (3) dans les états reçus sur le panneau de commande du robot (1) est éventuellement reçu dans l'un des plusieurs éléments fixes, sans ambiguïté orientations par rapport au panneau de commande du robot (1),
- un capteur (24) qui est conçu pour identifier un dispositif portatif (3) de commande de robot individuel inséré dans le panneau de commande de robot (1), et,
- un dispositif de communication (6) qui est conçu pour connecter une unité de commande portative (7) du dispositif de commande de robot portatif inséré (3) en fonction du dispositif de commande de robot portatif individuel (3) identifié par le capteur (24) avec l'un des dispositifs de commande portatifs individuels de robot (3) affecté à la commande de robot (8) en termes de commande.

2. Panneau de commande de robot selon la revendication 1, **caractérisé en ce que** le support (2) présente une poche (11) dont la surface intérieure a une forme correspondant à une section de poignée (12) de la commande de robot portable dispositif (3), de sorte que dans un état du dispositif portatif de commande de robot (3) enregistré sur le panneau de commande de robot (1), sa section de préhension (12) est reçue de manière ajustée dans la poche (11) du panneau de commande du robot (1).

3. Panneau de commande de robot selon la revendication 1 ou 2, **caractérisé en ce que** le support (2) a un support d'anneau ouvert radialement (13) de sorte que le support d'anneau (13) rejoint une section de boîtier (14) de la commande de robot dispositif portatif (3) l'état enregistré du panneau de commande du robot (1) du dispositif portatif du robot (3) englobe positivement, le support d'anneau (13) englobant une première section de jambe englobant la section de boîtier (14)) du dispositif de robot portatif (3) sur une circonférence partielle (13.1) et une deuxième section de jambe (13.2) opposée à la première section de jambe (13.1), qui entoure la section de logement (14) du dispositif de commande de robot portable (3) sur une circonférence partielle différente, et une première extrémité libre (15.1) du premier tronçon de jambe (13.1) est disposée à distance d'une deuxième extrémité libre (15.2) du deuxième tronçon de jambe (13.2), de sorte qu'une portée - un espace traversant (S) est formé entre les deux extrémités libres (15.1, 15.2), par l'intermédiaire desquelles le dispositif portable robot (3) est accessible par l'arrière malgré son state enregistré sur le panneau de commande du robot (1) afin de pouvoir détecter manuellement un côté arrière (17) de la section de boîtier (14) du dispositif portable de robot (3).

4. Panneau de commande de robot selon l'une des revendications 1 à 3, **caractérisé par** un dispositif de charge électrique (4) qui est conçu pour charger une réserve d'énergie électrique rechargeable (5) du dispositif portatif de commande de robot (3) dans un état de réception allumé le panneau de commande du robot (1) Appareil portable du robot (3).

5. Panneau de commande de robot selon la revendication 4, **caractérisé en ce que** le dispositif de charge électrique (4) présente un premier agencement de contact électrique (22.1) qui, lorsque le panneau de commande de robot (3) est enregistré sur le panneau de commande de robot (1), est connecté à un second contact électrique L'agencement de contact (22.2) du dispositif portable robot (3) est en contact électrique, pour charger la réserve d'énergie électrique rechargeable (5) du dispositif robot portatif (3) dans son état de réception sur le panneau de commande du robot (1).

6. Panneau de commande de robot selon la revendication 4, **caractérisé en ce que** le dispositif de charge électrique (4) comporte des composants de transmission inductive qui sont conçus pour la transmission sans contact d'énergie électrique du panneau de commande de robot (1) au dispositif portatif de commande de robot (3).

7. Panneau de commande de robot selon l'une des revendications 1 à 6, **caractérisé en ce que** le dispositif de communication (6) est connecté à une commande de robot (8) au moyen d'une connexion de communication (23) et au dispositif de communication (6)) est au moins un capteur (24) qui est conçu pour identifier un dispositif portatif de commande de robot (3) reçu sur le panneau de commande de robot (1), et le dispositif de communication (6) est conçu pour identifier la commande de robot dispositif portatif (24) identifié par le capteur (24). 3) pour s'enregistrer auprès de la commande de robot (8) en tant que dispositif de commande manuelle pour commander un bras de robot (25) commandé par la commande de robot (8) .

8. Panneau de commande de robot selon l'une des revendications 1 à 7, ayant une fente multifonctionnelle (26) qui est prévue pour inclure éventuellement l'une d'au moins deux unités enfichables alternatives (27) du groupe d'unités enfichables (27), support d'ordinateur tablette (27.1), moyens d'entrée supplémentaires (27.2), émetteur et / ou récepteur sans fil (27.3), prise de connexion électrique et capuchon (27.4), détachables manuellement.

9. Tableau de commande de robot selon l'une des revendications 1 à 8, comportant un support mural (28) conçu pour fixer le pupitre de commande du robot (1) à une paroi verticale (29).

10. Panneau de commande de robot selon l'une des revendications 1 à 8, comportant un support mobile (35) qui comprend un châssis (35.1) avec au moins trois roues (35.2) et une colonne de support (35.3) montée sur le châssis (35.1), sur auquel le panneau de commande du robot (1) est fixé.

11. Tableau de commande de robot selon l'une des revendications 1 à 10, comportant un bras support (30) qui présente au moins un premier élément (30.1) qui présente un dispositif de fixation (31) pour installer le bras support (30) notamment dans un poste fixe manière, et un deuxième élément (30.2) sur lequel le panneau de commande du robot (1) est monté, dans lequel le premier élément (30.1) est relié de manière réglable avec le deuxième élément (30.2) via au moins une articulation (32), de sorte que le le panneau de commande du robot (1) peut être ajusté dans sa position spatiale et / ou son emplacement par rapport au dispositif de fixation (31) en ajustant la au moins une articulation (32).

12. Tableau de commande de robot selon l'une des revendications 1 à 10, comportant un support de bras (30) qui présente au moins un premier élément (30.1) qui présente un dispositif de fixation (31) pour installer le bras support (30) notamment dans un poste fixe manière, et un deuxième élément (30.2) sur lequel le panneau de commande du robot (1) est monté, dans lequel le premier élément (30.1) est relié de manière réglable avec le deuxième élément (30.2) via au moins une articulation (32), de sorte que le panneau de commande du robot (1) peut être ajusté dans sa position spatiale et / ou son emplacement par rapport au dispositif de fixation (31) en ajustant la au moins une articulation (32).
